(19) Europäisches Patentamt
European Patent Office
Office européen des brevets

(11) EP 1 990 386 B1

(12) # EUROPEAN PATENT SPECIFICATION

(45) Date of publication and mention of the grant of the patent:
**28.01.2015 Bulletin 2015/05**

(51) Int Cl.:
*C09D 143/04* (2006.01) *C09D 183/10* (2006.01)
*C09D 183/04* (2006.01) *C08J 7/04* (2006.01)

(21) Application number: **08251623.8**

(22) Date of filing: **06.05.2008**

(54) **Primer compositions their use and coated articles**

Primerzusammensetzungen, ihre Verwendung und beschichtete Artikel

Compositions d'apprêt, leur utilisation et articles revêtus

(84) Designated Contracting States:
**DE FR GB**

(30) Priority: **07.05.2007 JP 2007122119**

(43) Date of publication of application:
**12.11.2008 Bulletin 2008/46**

(73) Proprietor: **Shin-Etsu Chemical Co., Ltd.**
**Tokyo (JP)**

(72) Inventors:
- **Higuchi, Koichi**
**Annaka-shi**
**Gunma-ken (JP)**
- **Yamaya, Masaaki**
**Annaka-shi**
**Gunma-ken (JP)**

(74) Representative: **Stoner, Gerard Patrick et al**
**Mewburn Ellis LLP**
**33 Gutter Lane**
**London**
**EC2V 8AS (GB)**

(56) References cited:
**EP-A1- 1 914 259 EP-A2- 1 408 082**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 990 386 B1

## Description

This invention relates to a primer composition comprising a vinyl polymer having hydrolyzable silyl groups and/or SiOH groups and organic ultraviolet-absorbing groups and a specific organopolysiloxane, a coated article comprising a substrate, a primer layer of the primer composition on the substrate, and a polysiloxane hard coat overlying the primer layer, and methods of making the composition and coated article.

## BACKGROUND

As the substitute for transparent plate glass, transparent materials which are shatterproof or more shatter resistant than glass have been widely utilized for these decades. For example, plastic substrates, especially polycarbonate resins have superior transparency, impact resistance and heat resistance and are currently used as structural members instead of glass in a variety of applications including building and vehicle windows and instrument covers.

The polycarbonate resins, however, are inferior to glass in surface properties such as mar resistance and weather resistance. It is desired to improve the surface properties of polycarbonate resin parts. Nowadays, polycarbonate resin parts for use as vehicle windows and acoustic barrier walls along highways are required to withstand more than 10 years of weathering.

Known means for improving the weather resistance of polycarbonate resin parts include the lamination of a weather resistant acrylic resin film on the surface of a polycarbonate resin substrate and the formation of a ultraviolet absorber-containing resin layer on the resin surface, for example, by co-extrusion.

For improving the mar resistance of polycarbonate resin parts, it is known to coat thermosetting resins such as polyorganosiloxanes and melamine resins and to coat photo-curable resins such as polyfunctional acrylic resins.

As to the manufacture of transparent articles having both weather resistance and mar resistance, JP-A 56-92059 and JP-A 1-149878 disclose ultraviolet-absorbing transparent substrates having a primer layer loaded with a large amount of UV absorber and a protective coating of colloidal silica-laden polysiloxane paint overlying the primer layer.

However, several problems arise with this approach. The addition of a large amount of UV absorber to the primer layer can adversely affect the adhesion of the primer layer to the substrate or the overlying protective coating of colloidal silica-laden polysiloxane. During heat curing step, the UV absorber can volatilize off. On outdoor use over a long period of time, the UV absorber will gradually bleed out, causing undesired effects like cracking, whitening or yellowing. From the mar resistance standpoint, it is impossible to add a large amount of UV absorber to the protective coating of colloidal silica-laden polysiloxane.

It is also known from JP-A 8-151415 that a mixture of a benzotriazole-derived UV absorbing vinyl monomer or a benzophenone-derived UV absorbing vinyl monomer and another vinyl monomer copolymerizable therewith is used in coating compositions, which are effective for forming protective coatings on surfaces of synthetic resins. Since these protective coatings are based on vinyl polymers, their mar resistance is limited.

JP-A 2001-114841, Japanese Patent No. 3,102,696, JP-A 2001-214122, and JP-A 2001-47574 disclose coating compositions comprising copolymers of a benzotriazole-derived UV absorbing vinyl monomer or a benzophenone-derived UV absorbing vinyl monomer, an alkoxysilyl group-containing vinyl monomer, and another vinyl monomer copolymerizable therewith. These multilayer-coated resin articles are said to be endowed with weather resistance while maintaining adhesion to the resin substrate.

In these patents, coated articles endowed with mar resistance and weather resistance are obtained by using a copolymer coating composition as a primer and forming a colloidal silica-laden polysiloxane resin coating thereon. They are noticeably improved in weather resistance and adhesion to the polysiloxane resin coating. However, since the formation of a crosslinked network by alkoxysilyl groups in the primer coating is suspended, post-crosslinking of residual (or uncured) alkoxysilyl or hydroxysilyl groups takes place over time. Thus the coating is likely to strain, allowing frequent failures like cracks and stripping. Long-term weather resistance is still insufficient. When the coating is subject to abrupt changes of the ambient temperature, especially changes at relatively high temperatures, it is more susceptible to cracks due to the post-crosslinking described above.

Furthermore, in JP-A 2004-1393, adhesion and crack resistance are improved by selecting a certain difference in coefficient of linear expansion between the substrate and the primer layer or acrylic resin layer and between the primer layer and the cured polysiloxane layer. Since the primer layer cannot contain a large amount of UV absorber, long-term weather resistance is still insufficient.

Our EP-A-1408082 describes primer compositions e.g. for polycarbonate resins, comprising a combination of (A) vinyl copolymer incorporating UV-absorbing groups and alkoxysilyl groups, (B) a curing agent reactive with (A), and (C) a thermoplastic vinyl resin having Tg $\geq$ 80°C. Preferred curing agents (B) are compounds containing nitrogen atoms and alkoxysilyl groups in the molecule, such as alkoxysilanes containing amino groups or amide groups and reaction products of these with dicarboxylic anhydrides or with alkoxysilanes containing (meth)acrylic groups or epoxy groups.

Our EP-A-1914259, published after the priority date of the present application, describes primer compositions

for polysiloxane hard coats, especially for use on polycarbonate resins, comprising (A) UV-absorbing vinyl copolymer (as in EP-A-1408082) and (B) fine silica particles in organic solvent, the cured compositions having a coefficient of linear expansion of up to 150x $10^{-6}$/° C. Preferably the composition comprises (C) a hydrolysable silicon compound which, in embodiments, is a compound containing nitrogen and alkoxysilyl as for curing agent (B) in EP-A-1408082.

An object herein is to provide new primer compositions useful in applying protective coatings to substrates, particularly polysiloxane coatings, and particularly with substrates of plastics materials, especially transparent substrates, such as polycarbonate. Preferred properties sought include good weather resistance, in combination with the avoidance or reduction of cracking, stripping and yellowing over time. The primer compositions, their preparation, use as primers and corresponding coated articles are all aspects of the invention.

We have found that long-term weather resistance is achievable when a substrate is coated with a primer composition comprising (A) a vinyl polymer having hydrolysable silyl groups and/or SiOH groups and organic UV-absorbing groups attached to side chains and (B) an organopolysiloxane having the general formula (1), defined below, in proportions specified below, the primer composition can cure to a primer layer having a coefficient of linear expansion equal to or less than $150\times10^{-6}$/°C, and that both long-term weather resistance and mar resistance are achievable by further laminating a polysiloxane-based outer protective coat on the primer layer.

$$\mathbf{(R)_aSi(Y)_bO_{(4-a-b)/2}} \qquad (1)$$

Herein each R independently is a substituted or unsubstituted monovalent hydrocarbon group of 1 to 18 carbon atoms as defined below, excluding amino-containing monovalent hydrocarbon groups, each Y independently is a hydroxyl group, an alkoxy group of 1 to 3 carbon atoms, an alkoxyalkoxy group of 2 to 4 carbon atoms, an acyloxy group of 1 to 6 carbon atoms, an alkenoxy group of 1 to 6 carbon atoms, or an isocyanate group, the subscripts "a" and "b" are numbers satisfying $0 < a < 2$, $0 < b < 3$, and $0 < a+b < 4$.

More particularly, the inventors studied primer compositions for accepting coatings capable of imparting long-term weather resistance to molded parts of thermoplastic resins, typically polycarbonate. When a primer composition comprising as constituents (A) a vinyl polymer having hydrolyzable silyl groups and/or SiOH groups and organic UV-absorbing groups attached to side chains and (B) a specific organopolysiloxane cures, a dense three-dimensional crosslinked network is formed by siloxane crosslinkage between hydrolyzable silyl groups and/or SiOH groups in the vinyl polymer (A), and siloxane crosslinkage between hydrolyzable silyl groups and/or SiOH groups in the vinyl polymer (A) and crosslinkable silyl groups and/or SiOH groups in the organopolysiloxane (B). A coating of the primer can then have a coefficient of linear expansion equal to or less than $150\times10^{-6}$/°C so that the coating undergoes less expansion and shrinkage due to a temperature difference than the prior art primers. Accordingly, a polysiloxane based hard resin coat overlying the primer coating avoids cracking and separation over a long term.

Moreover, the vinyl polymer (A) has organic UV-absorbing groups attached to side chains and crosslinks within a coating of the primer composition. Since the UV-absorbing groups are thus fixedly incorporated within the coating, they are unlikely to migrate to the coating surface, eliminating a whitening of outer appearance and a loss of adhesion. The UV-absorbing groups are not dissolved or leached in water and solvents, suppressing a lowering of the UV-absorbing effect with the lapse of time. The UV-absorbing groups do not volatilize off the coating even in heat-curing treatment at elevated temperature. As a result, weather resistance is significantly improved and maintained over a long period of time.

An organopolysiloxane based protective coating layer is formed on the surface of a coating of the primer composition. Since hydrolyzable silyl groups and/or SiOH groups in the vinyl polymer (A) and hydrolyzable silyl groups and/or SiOH groups in the organopolysiloxane (B) remain reactive with the organopolysiloxane based hard protective coating layer being applied, tight adhesion is achieved. As the hydrolyzable silyl groups and/or SiOH groups crosslink, heat resistance is improved and weather resistance and mar resistance are imparted.

Accordingly, the present invention provides a primer composition suited for accepting a weather resistant protective coating, an article coated with the primer composition, and methods of making these, as defined below.

In one aspect as set out in claim 1, the invention provides a primer composition suitable for priming for a polysiloxane outer coat, comprising

(A) vinyl polymer having hydrolysable silyl groups and/or SiOH groups and organic UV-absorbing groups attached to side chains, and
(B) organopolysiloxane of the general formula (1):

$$(R)_aSi(Y)_bO_{(4-a-b)/2} \qquad (1)$$

wherein

each R independently is a substituted or unsubstituted monovalent hydrocarbon group of 1 to 18 carbon atoms

excluding amino-containing monovalent hydrocarbon groups, being selected from alkyl, aryl, haloalkyl, haloaryl, alkenyl, substituted forms of the foregoing in which one or more hydrogen atoms are replaced by epoxy, (meth)acryloxy or mercapto group, and wherein the hydrocarbon group may be interrupted by O or S,
each Y independently is hydroxyl group, alkoxy group of 1 to 3 carbon atoms, alkoxyalkoxy group of 2 to 4 carbon atoms, acyloxy group of 1 to 6 carbon atoms, alkenoxy group of 1 to 6 carbon atoms, or isocyanate group, the subscripts "a" and "b" are numbers satisfying $0 < a < 2$, $0 < b < 3$ and $0 < a+b < 4$,
the amounts of component (B) being from 0.1 to 100 parts by weight solids per 100 parts by weight of (A);
said primer composition being curable to form a layer having a coefficient of linear expansion equal to or less than $150 x 10^{-6}$/°C,

Another aspect is a primer composition for a polysiloxane protective coat comprising (C) a composite or intermediate product obtainable by reaction of (A) vinyl polymer having hydrolysable silyl groups and/or SiOH groups and organic UV-absorbing groups attached to side chains with (B) an organopolysiloxane as set forth above, wherein the primer composition cures into a primer layer having a coefficient of linear expansion equal to or less than $150 \times 10^{-6}$/°C.
In a preferred embodiment, the vinyl polymer having hydrolyzable silyl groups and/or SiOH groups and organic UV-absorbing groups attached to side chains (A) is obtained through copolymerization of monomeric components including (a) a vinyl monomer having a hydrolyzable silyl group and/or SiOH group linked thereto through a C-Si linkage, (b) a vinyl monomer having an organic UV-absorbing group, and (c) another monomer copolymerizable therewith.
Typically, the organopolysiloxane (B) has a weight average molecular weight of at least 1,000. The primer composition may further comprise (D) colloidal silica, which may be added to organopolysiloxane (B), and/or (E) an organosilicon compound having a nitrogen atom and an alkoxysilyl group in the molecule.
Another aspect of the invention (claim 16) provides a coated article comprising a substrate, a primer coating formed on the substrate by applying and curing the primer composition defined above, and a polysiloxane hard coat overlying the primer coating. Other aspects are a method of making such coated articles (claim 13) and a method comprising the preparation of the primer composition (claim 12).
In one preferred embodiment, the polysiloxane hard coat is formed from a hard coating composition comprising a hydrolysate or cohydrolysate of at least one organooxysilane having the formula (2):

$$(R^7)_m Si(OR^8)_{4-m} \qquad (2)$$

wherein $R^7$ is an organic group of 1 to 10 carbon atoms, $R^8$ is hydrogen or a monovalent organic group, and m is 0, 1 or 2, and colloidal silica.

## BENEFITS

We find that primer compositions as proposed herein allow a large amount of an organic UV absorber to be retained within the coating, contributing to significantly improved light resistance. Since the organic UV absorber is fixedly incorporated within the coating through siloxane crosslinking, the UV absorber is prevented from flowing away with the lapse of time. A composite material resulting from siloxane crosslinking between the vinyl polymer and the organopolysiloxane serves as a binder having a low coefficient of linear expansion and better weather resistance, allowing for formation of a UV-absorbing protective coating with improved water resistance, solvent resistance and light resistance. When the primer composition is coated and cured to a less weather resistant article, the article can be provided with better weather resistance while preventing the article from being colored or degraded.
Plastic articles, especially polycarbonate resin articles, when covered with coatings of the primer compositions as proposed, are endowed with good or improved transparency and weather resistance. When polysiloxane hard coatings are laid on the primer coatings, the articles are additionally endowed with mar resistance and chemical resistance. The coated articles find outdoor use as windows and windshields on vehicles like automobiles and aircraft, windows in buildings, roadside noise-barrier walls and the like.

## FURTHER EXPLANATIONS; OPTIONS AND PREFERENCES

In the invention, the primer composition comprises as essential components (A) the vinyl polymer having hydrolysable silyl groups and/or SiOH groups and organic UV-absorbing groups attached to side chains, and (B) the organopolysiloxane of the general formula (1):

$$\mathbf{(R)_a Si(Y)_b O_{(4-a-b)/2}} \qquad (1)$$

wherein each R is as defined above, being substituted or unsubstituted monovalent hydrocarbon group of 1 to 18 carbon

atoms other than amino-containing monovalent hydrocarbon groups, Y is each independently a hydroxyl group, an alkoxy group of 1 to 3 carbon atoms, an alkoxyalkoxy group of 2 to 4 carbon atoms, an acyloxy group of 1 to 6 carbon atoms, an alkenoxy group of 1 to 6 carbon atoms, or an isocyanate group, the subscripts "a" and "b" are numbers satisfying $0 < a < 2$, $0 < b < 3$, and $0 < a+b < 4$.

In some embodiments of the invention, the primer composition comprises as an essential component (C) a composite obtained through reaction of the vinyl polymer (A) and the organopolysiloxane (B).

Component (A) is a vinyl polymer having hydrolysable silyl groups and/or SiOH groups and organic UV-absorbing groups attached to side chains. Preferred are vinyl polymers wherein hydrolysable silyl groups and/or SiOH groups are linked to the polymer backbone through Si-C linkages and more preferably organic UV-absorbing groups are also linked to the polymer backbone. These polymers are suitably obtainable by copolymerization of monomeric components including (a) a vinyl monomer having a hydrolyzable silyl group and/or SiOH group linked thereto through a C-Si linkage, (b) a vinyl monomer having an organic UV-absorbing group, and (c) another monomer copolymerizable therewith.

The vinyl monomer (a) having a hydrolyzable silyl group and/or SiOH group linked thereto through a C-Si linkage is not particularly limited as long as it has one vinyl polymerizable functional group and at least one hydrolyzable silyl group and/or SiOH group in the molecule.

Suitable vinyl polymerizable functional groups are organic groups of 2 to 12 carbon atoms including vinyl, vinyloxy, (meth)acryloxy and ($\alpha$-methyl)styryl groups. Examples include vinyl, 5-hexenyl, 9-decenyl, vinyloxymethyl, 3-vinyloxypropyl, (meth)acryloxymethyl, 3-(meth)acryloxypropyl, 11-(meth)acryloxyundecyl, vinylphenyl (or styryl), isopropenylphenyl (or $\alpha$-methylstyryl), and vinylphenylmethyl (or vinylbenzyl) groups. Inter alia, (meth)acryloxypropyl is preferred for reactivity and availability.

Suitable hydrolyzable groups include alkoxy groups such as methoxy, ethoxy, propoxy, isopropoxy, butoxy, isobutoxy, sec-butoxy, and tert-butoxy, acyloxy groups such as phenoxy and acetyloxy, oxime groups such as butanoxime, amino groups such as amino and methylamino, and halogen groups such as chloro. Inter alia, alkoxy groups such as methoxy and ethoxy are preferred for easy control of hydrolysis and availability.

Suitable substituent groups other than the foregoing substituents include alkyl groups such as methyl, ethyl, propyl, hexyl and decyl and phenyl groups. Inter alia, methyl is preferred for availability.

Examples of the vinyl monomer (a) having a hydrolyzable silyl group and/or SiOH group linked thereto through a C-Si linkage include methacryloxymethyltrimethoxysilane, methacryloxypropyltrimethoxysilane, methacryloxyundecyltrimethoxysilane, methacryloxypropylmethyldimethoxysilane, methacryloxypropyldimethylmethoxysilane, methacryloxypropyltriethoxysilane, acryloxypropyltrimethoxysilane, acryloxypropylmethyldimethoxysilane, acryloxypropyldimethylmethoxysilane, acryloxypropyltriethoxysilane, acryloxymethyltrimethoxysilane, acryloxyundecyltrimethoxysilane, vinyltrimethoxysilane, vinyltriethoxysilane, vinylmethyldimethoxysilane, allyltrimethoxysilane, styryltrimethoxysilane, styrylmethyldimethoxysilane, and styryltriethoxysilane.

Of these, methacryloxypropyltrimethoxysilane, methacryloxypropylmethyldimethoxysilane, methacryloxypropyldimethylmethoxysilane, acryloxypropyltrimethoxysilane, and acryloxypropylmethyldimethoxysilane are preferred for availability, ease of handling, crosslinked density and reactivity.

The amount of the vinyl monomer (a) having a hydrolyzable silyl group and/or SiOH group linked thereto through a C-Si linkage is preferably 1 to 50% by weight and more preferably 3 to 40% by weight based on the copolymer composition. If the amount of the vinyl monomer (a) is less than 1 wt%, the formation of a siloxane network by crosslinking with the organopolysiloxane and crosslinking between vinyl copolymers may be insufficient so that the coating has not a fully low coefficient of linear expansion and hence, is not improved in heat resistance and durability. If the amount of the vinyl monomer (a) is more than 50 wt%, a coating may have a high crosslinked density and become hard enough to detract from adhesion, and more hydrolyzable groups or SiOH groups may be left unreacted, which allow more cracks to occur due to post-crosslinking over time.

The vinyl monomer (b) having an organic UV-absorbing group is not particularly limited as long as it contains a UV-absorbing group and a vinyl polymerizable group in the molecule.

Typical of the vinyl monomer (b) having an organic UV-absorbing group are (meth)acrylic monomers. Typical UV-absorbing groups in the invention are benzotriazole and benzophenone groups. Thus, suitable vinyl monomers (b) include those of formulae (3) and (4) below.

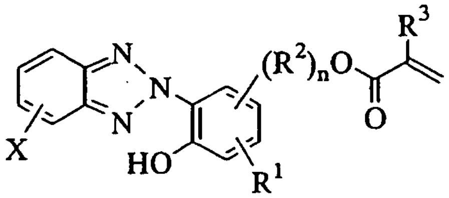

(3)

In formula (3), X is hydrogen or chlorine; $R^1$ is hydrogen, methyl or a tertiary alkyl group having 4 to 8 carbon atoms; $R^2$ is a straight or branched alkylene group having 2 to 10 carbon atoms; $R^3$ is hydrogen or methyl; and n is 0 or 1.

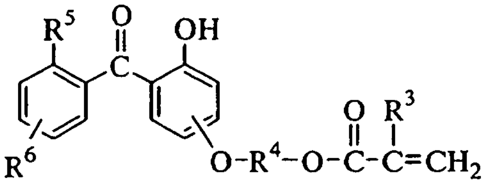

(4)

In formula (4), $R^3$ is as defined above; $R^4$ is a substituted or unsubstituted straight or branched alkylene group having 2 to 10 carbon atoms; $R^5$ is hydrogen or hydroxyl; and $R^6$ is hydrogen, hydroxyl or an alkoxy group having 1 to 6 carbon atoms.

In formula (3), suitable tertiary alkyl groups having 4 to 8 carbon atoms represented by $R^1$ include tert-butyl, tert-pentyl, tert-hexyl, tert-heptyl, tert-octyl and di-tert-octyl. Suitable straight or branched alkylene groups having 2 to 10 carbon atoms represented by $R^2$ include ethylene, trimethylene, propylene, tetramethylene, 1,1-dimethyltetramethylene, butylene, octylene, and decylene.

In formula (4), suitable straight or branched alkylene groups having 2 to 10 carbon atoms represented by $R^4$ include those exemplified for $R^2$, and substituted forms thereof in which some hydrogen atoms are replaced by halogen atoms. Suitable alkoxy groups represented by $R^6$ include methoxy, ethoxy, propoxy, and butoxy.

Examples of suitable benzotriazole derivatives of formula (3) include, but are not limited to, 2-(2'-hydroxy-5'-(meth)acryloxyphenyl)-2H-benzotriazole, 2-(2'-hydroxy-3'-tert-butyl-5'-(meth)acryloxymethylphenyl)-2H-benzotriazole, 2-[2'-hydroxy-5'-(2-(meth)acryloxyethyl)phenyl]-2H-benzotriazole, 2-[2'-hydroxy-3'-tert-butyl-5'-(2-(meth)acryloxyethyl)-phenyl]-5-chloro-2H-benzotriazole, and 2-[2'-hydroxy-3'-methyl-5'-(8-(meth)acryloxyoctyl)phenyl]-2H-benzotriazole.

Examples of suitable benzophenone derivatives of formula (4) include, but are not limited to, 2-hydroxy-4-(2-(meth)acryloxyethoxy)benzophenone, 2-hydroxy-4-(4-(meth)acryloxybutoxy)benzophenone, 2,2'-dihydroxy-4-(2-(meth)acryloxyethoxy)benzophenone, 2,4-dihydroxy-4'-(2-(meth)acryloxyethoxy)benzophenone, 2,2',4-trihydroxy-4'-(2-(meth)acryloxyethoxy)benzophenone, 2-hydroxy-4-(3-(meth)acryloxy-2-hydroxypropoxy)benzophenone, and 2-hydroxy-4-(3-(meth)acryloxy-1-hydroxypropoxy)benzophenone.

As the UV-absorbing vinyl monomer (b), benzotriazole compounds of formula (3) are preferred, with 2-[2'-hydroxy-5'-(2-(meth)acryloxyethyl)phenyl]-2H-benzotriazole being most preferred. The UV-absorbing vinyl monomers may be used alone or in admixture of any.

The amount of UV-absorbing vinyl monomer (b) used is preferably 1 to 30% by weight, and more preferably 3 to 25% by weight based on the copolymer composition. Less than 1 wt% of monomer (b) may fail to provide desired weather resistance. More than 30 wt% of monomer (b) may result in a coating which is less adhesive and has outer appearance defectives such as whitening.

The other monomer (c) copolymerizable with the foregoing monomers (a) and (b) is not particularly limited as long as it is a copolymerizable monomer. Typical monomers include (meth)acrylic monomers having a cyclic hindered amine structure, (meth)acrylic acid esters, (meth)acrylonitriles, (meth)acrylamides, alkyl vinyl ethers, alkyl vinyl esters, styrene, and derivatives thereof.

Examples of suitable (meth)acrylic monomers having a cyclic hindered amine structure are 2,2,6,6-tetramethyl-4-piperidinyl methacrylate and 1,2,2,6,6-pentamethyl-4-piperidinyl methacrylate. These light stabilizers may be used in admixture of two or more.

Examples of suitable (meth)acrylates and derivatives thereof include
(meth)acrylates of monohydric alcohols such as methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, t-butyl (meth)acrylate, n-pentyl (meth)acrylate, isopentyl (meth)acrylate, n-hexyl (meth)acrylate, isohexyl (meth)acrylate, n-heptyl (meth)acrylate, isoheptyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-undecyl (meth)acrylate, n-dodecyl (meth)acrylate, lauryl (meth)acrylate, palmityl (meth)acrylate, stearyl (meth)acrylate, cyclohexyl (meth)acrylate, 4-methylcyclohexyl (meth)acrylate, 4-t-butylcyclohexyl (meth)acrylate, isobornyl (meth)acrylate, dicyclopentanyl (meth)acrylate, dicyclopentenyloxyethyl (meth)acrylate, and benzyl (meth)acrylate;

(meth)acrylates of alkoxy(poly)alkylene glycols such as 2-methoxyethyl (meth)acrylate, 2-methoxypropyl (meth)acrylate, 3-methoxypropyl (meth)acrylate, 2-methoxybutyl (meth)acrylate, 3-methoxybutyl (meth)acrylate, 4-methoxybutyl (meth)acrylate, methoxypolyethylene glycol (meth)acrylate (e.g., the number of ethylene glycol units is 2 to 20), and methoxypolypropylene glycol (meth)acrylate (e.g., the number of propylene glycol units is 2 to 20);

mono(meth)acrylates of polyhydric alcohols such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, glycerin mono(meth)acrylate, pentaerythritol mono(meth)acrylate, polyethylene glycol mono(meth)acrylate (e.g., the number of ethylene glycol units is 2 to 20), and polypropylene glycol mono(meth)acrylate (e.g., the number of propylene glycol units is 2 to 20);

poly(meth)acrylates of polyhydric alcohols such as ethylene glycol di(meth)acrylate, propylene glycol di(meth)acrylate, butylene glycol di(meth)acrylate, glycerin di(meth)acrylate, glycerin tri(meth)acrylate, pentaerythritol di(meth)acrylate, pentaerythritol tetra(meth)acrylate, 1,4-cyclohexane diol di(meth)acrylate, polyethylene glycol di(meth)acrylate (e.g., the number of ethylene glycol units is 2 to 20), and polypropylene glycol di(meth)acrylate (e.g., the number of propylene glycol units is 2 to 20);

(poly)esters of non-polymerizable polybasic acids with hydroxylalkyl (meth)acrylates, such as mono[2-(meth)acryloyloxyethyl] succinate, di[2-(meth)acryloyloxyethyl] succinate, mono[2-(meth)acryloyloxyethyl] adipate, di[2-(meth)acryloyloxyethyl] adipate, mono[2-(meth)acryloyloxyethyl] phthalate, and di[2-(meth)acryloyloxyethyl] phthalate;

amino group-containing (meth)acrylates such as 2-aminoethyl (meth)acrylate, 2-(N-methylamino)ethyl (meth)acrylate, 2-(N,N-dimethylamino)ethyl (meth)acrylate, 2-(N-ethylamino)ethyl (meth)acrylate, 2-(N,N-diethylamino)ethyl (meth)acrylate, 3-(N,N-dimethylamino)propyl (meth)acrylate, and 4-(N,N-dimethylamino)butyl (meth)acrylate; and

epoxy group-containing (meth)acrylates such as glycidyl (meth)acrylate.

Examples of suitable (meth)acrylonitrile derivatives include α-chloroacrylonitrile, α-chloromethylacrylonitrile, α-trifluoromethylacrylonitrile, α-methoxyacrylonitrile, α-ethoxyacrylonitrile, and vinylidene cyanide. Examples of suitable (meth)acrylamide derivatives include N-methyl(meth)acrylamide, N,N-dimethyl(meth)acrylamide, N-ethyl(meth)acrylamide, N,N-diethyl(meth)acrylamide, N-methoxy(meth)acrylamide, N,N-dimethoxy(meth)acrylamide, N-ethoxy(meth)acrylamide, N,N-diethoxy(meth)acrylamide, diacetone (meth)acrylamide, N-methylol (meth)acrylamide, N-(2-hydroxyethyl)(meth)acrylamide, N,N-dimethylaminomethyl(meth)acrylamide, N-(2-dimethylamino)ethyl(meth)acrylamide, N,N'-methylenebis(meth)acrylamide, and N,N'-ethylenebis(meth)acrylamide. Examples of suitable alkyl vinyl ethers include methyl vinyl ether, ethyl vinyl ether, butyl vinyl ether, and hexyl vinyl ether. Examples of suitable alkyl vinyl esters include vinyl formate, vinyl acetate, vinyl acrylate, vinyl lactate, vinyl caproate, and vinyl stearate. Examples of styrene and derivatives thereof include styrene, α-methylstyrene, and vinyl toluene.

Of these monomers, (meth)acrylates are preferred. Especially preferred are methyl (meth)acrylate, ethyl (meth)acrylate, isopropyl (meth)acrylate, n-butyl (meth)acrylate, isobutyl (meth)acrylate, n-hexyl (meth)acrylate, 2-ethylhexyl (meth)acrylate, isononyl (meth)acrylate, lauryl (meth)acrylate, cyclohexyl (meth)acrylate, 4-methylcyclohexyl (meth)acrylate, 4-t-butylcyclohexyl (meth)acrylate, isobornyl (meth)acrylate, dicyclopentanyl (meth)acrylate, and dicyclopentenyloxyethyl (meth)acrylate.

The other copolymerizable monomers (c) may be used alone or in admixture of two or more of the foregoing monomers.

The amount of the other copolymerizable monomer (c) is preferably 20 to 98% by weight and more preferably 35 to 94% by weight based on the copolymer composition. If the amount of the other monomer (c) is too much, there arises insufficient crosslinking between the resulting vinyl copolymers or between the resulting vinyl copolymer and colloidal silica so that the coating may not have a low coefficient of linear expansion, may not be improved in heat resistance or durability, and may not provide weather resistance. Less amounts of monomer (c) may result in too high a crosslinked density, poor adhesion, and outer appearance defectives such as whitening.

As described above, the vinyl polymer (A) is obtained through copolymerization of (a) a vinyl monomer having a hydrolyzable silyl group and/or SiOH group linked thereto through a C-Si linkage, (b) a vinyl monomer having an organic UV-absorbing group, and (c) another monomer copolymerizable therewith. The copolymer is readily obtained by dissolving the monomers in a solvent, adding a radical polymerization initiator to the monomer solution, and reacting the monomers under heat. Suitable radical polymerization initiators include peroxides such as dicumyl peroxide and benzoyl peroxide and azo compounds such as azobisisobutyronitrile. Polymerization is conducted while heating, for example, at 50 to 150°C and especially at 70 to 120°C, for 1 to 10 hours and especially for 3 to 8 hours.

The vinyl copolymer (A) preferably has a weight average molecular weight (Mw) of 1,000 to 300,000 and more preferably 5,000 to 250,000, as measured by gel permeation chromatography (GPC) versus polystyrene standards. A

copolymer with too high a Mw may have too high a viscosity, and be difficult to synthesize or to handle. A copolymer with too low a Mw may give a coating which has outer appearance defects such as whitening and is insufficient in adhesion, durability and weather resistance.

Described below is the organopolysiloxane (B) which is another essential component in the primer composition.

The organopolysiloxane (B) is not particularly limited as long as it is represented by the general formula (1) and a primer layer obtained by curing a primer composition comprising the organopolysiloxane has a coefficient of linear expansion equal to or less than $150\times10^{-6}$/°C.

$$(R)_aSi(Y)_bO_{(4-a-b)/2} \qquad (1)$$

Herein R which may be the same or different is selected from substituted or unsubstituted monovalent hydrocarbon groups of 1 to 18 carbon atoms excluding amino-containing monovalent hydrocarbon groups; Y which may be the same or different is selected from among hydroxyl groups, alkoxy groups of 1 to 3 carbon atoms, alkoxyalkoxy groups of 2 to 4 carbon atoms, acyloxy groups of 1 to 6 carbon atoms, alkenoxy groups of 1 to 6 carbon atoms, and isocyanate groups; the subscripts "a" and "b" are numbers satisfying $0 < a < 2$, $0 < b < 3$, and $0 < a+b < 4$.

Since the organopolysiloxane (B) contains hydrolyzable silyl groups and/or SiOH groups in the molecule, it forms siloxane crosslinks with hydrolyzable silyl groups and/or SiOH groups in the vinyl polymer (A) to produce a composite. As a result, the coefficient of linear expansion is readily reduced to $150\times10^{-6}$/°C or below.

In formula (1), R which may be the same or different is selected from substituted or unsubstituted monovalent hydrocarbon groups of 1 to 18 carbon atoms other than amino-containing monovalent hydrocarbon groups, for example, alkyl, aryl, haloalkyl, haloaryl, and alkenyl groups and substituted forms of the foregoing hydrocarbon groups in which one or more hydrogen atoms are replaced by epoxy, (meth)acryloxy, mercapto or other groups or atoms, and which hydrocarbon groups may be separated (interrupted) by heteroatom such as O or S. Illustrative examples include alkyl groups such as methyl, ethyl, propyl, isopropyl, butyl, hexyl, decyl, and cyclohexyl; aryl groups such as phenyl and phenethyl; haloalkyl groups such as 3-chloropropyl, 3,3,3-trifluoropropyl, and 3,3,4,4,5,5,6,6,6-nonafluorohexyl; haloaryl groups such as p-chlorophenyl, alkenyl groups such as vinyl, allyl, 9-decenyl and p-vinylbenzyl; epoxy-containing organic groups such as 3-glycidoxypropyl, β -(3,4-epoxycyclohexyl)ethyl, and 9,10-epoxydecyl; (meth)acryloxy-containing organic groups such as γ -methacryloxypropyl and γ-acryloxypropyl; and mercapto-containing organic groups such as γ-mercaptopropyl and p-mercaptomethylphenylethyl. Of these, alkyl groups are preferred when the primer composition is used in the application where mar resistance and weather resistance are required; and epoxy or (meth)acryloxy-substituted hydrocarbon groups are preferred where adhesion is required.

Y which may be the same or different is selected from among hydroxyl groups, alkoxy groups of 1 to 3 carbon atoms, alkoxyalkoxy groups of 2 to 4 carbon atoms, acyloxy groups of 1 to 6 carbon atoms, alkenoxy groups of 1 to 6 carbon atoms, and isocyanate groups, for example, methoxy, ethoxy, propoxy, isopropoxy, methoxymethoxy, methoxyethoxy, acetoxy, and isopropenyl. Inter alia, methoxy, ethoxy and isopropoxy groups are preferred when the reactivity of organopolysiloxane (B) is taken into account.

The subscripts "a" and "b" are numbers satisfying $0 < a < 2$, $0 < b < 3$, and $0 < a+b < 4$, and preferably $0.2 \le a \le 1.7$, $0.1 \le b$ s 2.7, and $0.3 \le a+b \le 3.7$.

The organopolysiloxane (B) may be obtained through (co)hydrolytic condensation of at least one silane compound having the general formula (5) or a partial hydrolytic condensate thereof in a well-known way. The (co)hydrolytic condensates of silane compounds may be used alone or in admixture of two or more.

$$(R)_cSi(Z)_{4-c} \qquad (5)$$

Herein R is as defined in formula (1), Z which may be the same or different is selected from among alkoxy groups of 1 to 3 carbon atoms, alkoxyalkoxy groups of 2 to 4 carbon atoms, acyloxy groups of 1 to 6 carbon atoms, alkenoxy groups of 1 to 6 carbon atoms, and isocyanate groups, and c is an integer of 0 to 2.

In formula (5), R is as exemplified above for R in formula (1). Of such examples, alkyl groups are preferred when the primer composition is used in the application where mar resistance and weather resistance are required; and epoxy or (meth)acryloxy-substituted hydrocarbon groups are preferred where adhesion is required.

Z which may be the same or different is selected from among alkoxy groups of 1 to 3 carbon atoms, alkoxyalkoxy groups of 2 to 4 carbon atoms, acyloxy groups of 1 to 6 carbon atoms, alkenoxy groups of 1 to 6 carbon atoms, and isocyanate groups, for example, methoxy, ethoxy, propoxy, isopropoxy, methoxymethoxy, methoxyethoxy, acetoxy, and isopropenyl. Inter alia, methyl, ethyl and isopropenyl groups are preferred because the hydrolytic condensation proceeds effectively, and the resulting alcohol or ketone Z-H has a high vapor pressure and is easy to distill off.

Illustrative examples of the silane compounds satisfying the above requirements include trialkoxysilanes or triacyloxysilanes such as methyltrimethoxysilane, methyltriethoxysilane, methyltris(2-methoxyethoxy)silane, methyltriacetoxysilane, methyltripropoxysilane, methyltriisopropenoxysilane, ethyltrimethoxysilane, ethyltriethoxysilane, vinyltrimethoxysilane, vinyltriethoxysilane, vinyltriacetoxysilane, vinyltris(2-methoxyethoxy)silane, vinyltriisopropenoxysilane, phenyltrimethoxysilane, phenyltriethoxysilane, phenyltriacetoxysilane,γ -chloropropyltrimethoxysilane, γ-chloropropyltriethoxysilane, γ -chloropropyltripropoxysilane, 3,3,3-trifluoropropyltrimethoxysilane, γ-glycidoxypropyltrimethoxysilane, γ -glycidoxypropyltriethoxysilane, β -(3,4-epoxycyclohexyl)ethyltrimethoxysilane, β -(3,4-epoxycyclohexyl)ethyltriethoxysilane, γ -methacryloxypropyltrimethoxysilane, γ-acryloxypropyltrimethoxysilane, γ -mercaptopropyltrimethoxysilane, and γ -mercaptopropyltriethoxysilane, as well as partial hydrolytic condensates of methyltrimethoxysilane (commercially available as KC-89S and X-40-9220 from Shin-Etsu Chemical Co., Ltd.) and partial hydrolytic condensates of methyltrimethoxysilane and γ -glycidoxypropyltrimethoxysilane (commercially available as X-41-1056 from Shin-Etsu Chemical Co., Ltd.).

Also included are dialkoxysilanes or diacyloxysilanes such as dimethyldimethoxysilane, dimethyldiethoxysilane, dimethyldi(2-methoxyethoxy)silane, dimethyldiacetoxysilane, dimethyldipropoxysilane, dimethyldiisopropenoxysilane, vinylmethyldimethoxysilane, vinylmethyldiethoxysilane, vinylmethyldiacetoxysilane, vinylmethyldi(2-methoxyethoxy)silane, vinylmethyldiisopropenoxysilane, phenylmethyldimethoxysilane, phenylmethyldiethoxysilane, phenylmethyldiacetoxysilane, γ -propylmethyldimethoxysilane, γ-propylmethyldiethoxysilane, γ -propylmethyldipropoxysilane, 3,3,3-trifluoropropylmethyldimethoxysilane, γ -glycidoxypropylmethyldimethoxysilane, γ -glycidoxypropylmethyldiethoxysilane, β -(3,4-epoxycyclohexyl)ethylmethyldimethoxysilane,β- (3,4-epoxycyclohexyl)ethylmethyldiethoxysilane, γ-methacryloxypropylmethyldimethoxysilane, γ -acryloxypropylmethyldimethoxysilane, γ -mercaptopropylmethyldimethoxysilane, and γ-mercaptopropylmethyldiethoxysilane.

Also included are tetraalkoxysilanes such as methyl silicate, ethyl silicate, and N-propyl silicate, as well as partial hydrolytic condensates of tetramethoxysilane (commercially available as M Silicate 51 from Tama Chemicals Co., Ltd., MSI51 from Colcoat Co., Ltd., and MS51 and MS56 from Mitsubishi Chemical Co., Ltd.), partial hydrolytic condensates of tetraethoxysilane (commercially available as Silicate 35 and Silicate 45 from Tama Chemicals Co., Ltd., and ESI40 and ESI48 from Colcoat Co., Ltd.), and partial cohydrolytic condensates of tetramethoxysilane and tetraethoxysilane (commercially available as FR-3 from Tama Chemicals Co., Ltd. and EMSi48 from Colcoat Co., Ltd.).

Also included are bissilane compounds such as bis(trimethoxysilyl)ethane, bis(trimethoxysilyl)hexane, bis(trimethoxysilyl)decane, bis(triethoxysilyl)hexane, bis(trimethoxysilyl)benzene, and bis(trimethoxysilyloxydimethylsilyl)benzene.

For example, the organopolysiloxane (B) may be obtained through (co)hydrolysis of a silicon compound of formula (5) or a partial hydrolytic condensate thereof alone or a mixture thereof in water at pH 1 to 7, preferably pH 2 to 6, and more preferably pH 2 to 5. For hydrolysis, metal oxide microparticulates dispersed in water such as colloidal silica may be used. Catalysts may be used to adjust to the desired pH range and to promote hydrolysis. Exemplary catalysts include organic acid and inorganic acids such as hydrofluoric acid, hydrochloric acid, nitric acid, formic acid, acetic acid, propionic acid, oxalic acid, citric acid, maleic acid, benzoic acid, malonic acid, glutaric acid, glycolic acid, methanesulfonic acid, and toluenesulfonic acid; solid acid catalysts such as cation exchange resins having carboxylic acid groups or sulfonic acid groups on their surface; and water-dispersed metal oxide microparticulates such as acidic water-dispersed colloidal silica. Alternatively, metal oxide microparticulates dispersed in water or organic solvent such as colloidal silica may be co-present during hydrolysis.

On hydrolysis, water may be used in an amount of 20 to 3,000 parts by weight per 100 parts by weight in total of the silicon compound of formula (5) and/or partial hydrolytic condensate thereof. Use of an excess of water may not only detract from the system efficiency, but also invite a drawback that when a primer composition is eventually formulated, the solubility of organopolysiloxane (B) in vinyl polymer (A) can be reduced, or the residual water can adversely affect applicability and drying efficiency. From these considerations, the preferred amount of water used is from 50 parts to 200 parts by weight. If the amount of water is less than 20 pbw, the resulting organopolysiloxane has a weight average molecular weight which may not reach the optimum range described below, as measured by GPC versus polystyrene standards.

Hydrolysis may be carried out by adding dropwise or pouring water to an alkoxysilane or a partial hydrolytic condensate thereof, or vice versa. An organic solvent may be present in the system although the absence of organic solvent is preferred. This is because the resulting silicone resin tends to have a lower weight average molecular weight as measured by GPC versus polystyrene standards as the system contains a more amount of organic solvent.

To produce the organopolysiloxane (B), the hydrolysis should be followed by condensation. Condensation may be effected contiguous to the hydrolysis, typically while keeping the liquid at room temperature or heating at a temperature below 100°C. Temperatures above 100°C may cause gelation. Condensation may be promoted by distilling off the alcohol or ketone resulting from hydrolysis at or above 80°C under atmospheric pressure or reduced pressure. For the purpose of promoting condensation, a condensation catalyst such as a basic compound, acidic compound or metal chelate compound may be added. Prior to or during the condensation step, an organic solvent may be added for the purpose of adjusting the progress of condensation and the concentration, and metal oxide microparticulates dispersed in water or organic solvent such as colloidal silica may also be added. In general, with the progress of condensation, the organopolysiloxane gains a higher molecular weight and reduces its solubility in water or product alcohol. Therefore,

the organic solvent to be added is preferably an organic solvent having a boiling point of at least 80°C and a relatively high polarity in which the organopolysiloxane is fully soluble. Illustrative examples of suitable organic solvents include alcohols such as isopropyl alcohol, n-butanol, isobutanol, t-butanol, and diacetone alcohol; ketones such as methyl propyl ketone, diethyl ketone, methyl isobutyl ketone, cyclohexanone, and diacetone alcohol; ethers such as dipropyl ether, dibutyl ether, anisole, dioxane, ethylene glycol monoethyl ether, ethylene glycol monobutyl ether, propylene glycol monomethyl ether, and propylene glycol monomethyl ether acetate; and esters such as propyl acetate, butyl acetate, and cyclohexyl acetate.

The organopolysiloxane resulting from condensation should preferably have a weight average molecular weight (Mw) of at least 1,000, more preferably 1,000 to 50,000 and even more preferably 1,500 to 20,000, as measured by GPC versus polystyrene standards. If Mw is below the range, the coating tends to be less tough or less adhesive. If Mw is above the range, the organopolysiloxane (B) may have a lower solubility in vinyl polymer (A) so that the resin in the coating undergoes phase separation, leading to inefficient coating operation or a whitening of the coating.

To the organopolysiloxane (B), (D) colloidal silica dispersed in water or organic solvent may be added. As to the addition of colloidal silica, it may be simply added to the organopolysiloxane or it may be premixed with the above-mentioned silane compound(s) prior to hydrolysis and condensation. In the latter case, if water-dispersed colloidal silica is used, the water in the water-dispersed colloidal silica may be utilized as part or all of the water necessary for the hydrolysis of silane compounds. Suitable water-dispersed colloidal silica is commercially available, for example, under the trade name of Snowtex O, Snowtex OS, Snowtex C, and Snowtex 20 from Nissan Chemical Industries, Ltd., and Cataloid SN, Cataloid SA and Cataloid SI-30 from Catalysts & Chemicals Industries Co., Ltd.

For the organic solvent-dispersed colloidal silica, suitable organic solvents include methanol, ethanol, isopropanol, n-butanol, ethylene glycol, ethyl cellosolve, butyl cellosolve, propylene glycol monomethyl ether, propylene glycol monomethyl ether acetate, dimethylformamide, dimethylacetamide, methyl ethyl ketone, methyl isobutyl ketone, and xylene/n-butanol mixture. Inter alia, ethylene glycol, ethyl cellosolve, butyl cellosolve, propylene glycol monomethyl ether, propylene glycol monomethyl ether acetate, methyl ethyl ketone, and methyl isobutyl ketone are preferred for solubility in vinyl polymer (A). Such colloidal silica is commercially available, for example, under the trade name of PMA-ST, MEK-ST, MIBK-ST, IPA-ST-L, IPA-ST-MS, EG-ST-ZL, DMAC-ST-ZL and XBA-ST from Nissan Chemical Industries, Ltd., and OSCAL 1132, 1332, 1532, 1722, and ELCOM ST-1003SIV from Catalysts & Chemicals Industries Co., Ltd.

In view of dispersion in and transparency of a cured primer coating, the colloidal silica should preferably have a primary particle size of 0.5 to 100 nm and more preferably 2 to 50 nm. With a size in excess of 100 nm, the dispersion of colloidal silica in the primer composition may become less stable or the cured coating may suffer a significant loss of transparency. The colloidal silica may be used alone or in admixture of two or more species.

With regard to the colloidal silica dispersed in water or organic solvent, the concentration of colloidal silica is not particularly limited. It is recommended to use colloidal silica dispersed in water or organic solvent in a concentration of 5 to 50% by weight, and more preferably 10 to 30% by weight.

The colloidal silica dispersed in water or organic solvent is preferably added to organopolysiloxane (B) in such amounts that 0 to 50 parts by weight of colloidal silica (D) is present per 100 parts by weight as solids of organopolysiloxane (B). More preferably 5 to 30 parts by weight of colloidal silica is present. If the amount of colloidal silica added is too small, a coating layer of the primer composition may sometimes fail to have a coefficient of linear expansion equal to or less than $150 \times 10^{-6}$/°C. If the amount is too large, the coating may be prone to whitening in outer appearance.

In the primer composition with colloidal silica, the vinyl polymer having hydrolyzable silyl groups and/or SiOH groups and organic UV-absorbing groups attached to side chains (A) and the organopolysiloxane (B) and the colloidal silica (D) are preferably compounded in such amounts that 0.1 to 100 parts by weight as solids of organopolysiloxane (B) and colloidal silica (D) is present per 100 parts by weight of vinyl polymer (A). More preferably organopolysiloxane (B) and colloidal silica (D) are present in a total amount of 1 to 50 parts by weight as solids. If the total amount of components (B) and (D) is more than 100 pbw, a coating layer of the primer composition may have too high a crosslinked density, that is, the coating may have too high a hardness and hence, may have poor adhesion to the underlying substrate or the overlying polysiloxane coating. If the total amount of components (B) and (D) is less than 0.1 pbw, a coating layer of the primer composition may have too low a crosslinked density, and hence, have a coefficient of linear expansion in excess of $150 \times 10^{-6}$/°C, failing to achieve the desired adhesion and crack resistance.

Another general possibility is that the primer composition comprises (C), a composite obtained through reaction of (A), the vinyl polymer having hydrolysable silyl groups and/or SiOH groups and organic UV-absorbing groups attached to side chains, with (B) organopolysiloxane, both as set forth above. Once a composite or intermediate product is formed by pre-reacting (A) and (B), the primer composition is more readily curable and the primer coating has a lower coefficient of linear expansion.

The reaction of (A) a vinyl polymer having hydrolyzable silyl groups and/or SiOH groups and organic UV-absorbing groups attached to side chains with (B) an organopolysiloxane is carried out while heating, for example, at a temperature of 30 to 120°C, specifically 40 to 80°C, for a time of 0.5 to 12 hours, specifically 1 to 10 hours, whereby composite (C) is obtained. The amounts of components (A) and (B) used are preferably such that component (B) or

components (B) and (D) as solids is 0.1 to 100 parts by weight per 100 parts by weight of the resin or component (A). The more preferred amount is 1 to 50 parts by weight. It is only required that part of component (A) and/or (B) have reacted. If the amount of component (A) is too small (i.e., the amount of component (B) is too large), then a coating layer of the primer composition may have too high a crosslinked density, that is, the coating may have poor adhesion to the underlying substrate or the overlying polysiloxane coating, and the primer composition may gel during shelf storage. If the amount of component (A) is too large (i.e., the amount of component (B) is too small), a coating layer may have too low a crosslinked density, and hence, have a coefficient of linear expansion in excess of $150\times10^{-6}$/°C, failing to achieve the desired adhesion and crack resistance. With the progress of reaction, a coating layer of the primer composition tends to have a higher gel fraction and a lower coefficient of linear expansion. It is noted that the gel fraction is measured by the method to be described later.

In addition to the foregoing components, (E) an organosilicon compound containing a nitrogen atom and an alkoxysilyl group in the molecule may be added to the primer composition. Inclusion of the organosilicon compound containing a nitrogen atom and an alkoxysilyl group in the molecule (E) provides a coating layer of the primer composition with water resistant better adhesion. Additionally, the organosilicon compound (E) crosslinks with hydrolyzable silyl groups and/or SiOH groups in the vinyl polymer (A), whereby the coating is densified. These crosslinking reactions are accelerated by the nitrogen atoms in the organosilicon compound (E) whereby the amount of residual alkoxysilyl groups in the coating is reduced, suppressing cracking due to post-crosslinking over time and ensuring efficient fixation within the coating layer of the UV absorber or light stabilizer which are optionally added to the primer composition.

The organosilicon compound containing a nitrogen atom and an alkoxysilyl group in the molecule (E) is preferably a compound containing at least one nitrogen atom and at least one alkoxysilyl group in the molecule, and more preferably a compound containing at least one nitrogen atom and at least two alkoxysilyl groups in the molecule. Preferred examples of the compound used herein include an amino group-containing alkoxysilane, amino group-containing di(alkoxysilane), amide group-containing alkoxysilane, the amide product obtained by reacting an amino group-containing alkoxysilane with an epoxy group-containing alkoxysilane and a silylating agent and amidating the reaction product, the reaction product of an amino group-containing alkoxysilane with a dicarboxylic anhydride, the reaction product of an amino group-containing alkoxysilane with a (poly)(meth)acrylic compound, the reaction product of an amino group-containing alkoxysilane with a (meth)acrylic group-containing alkoxysilane, the reaction product of a polyamine compound with a (meth)acrylic group-containing alkoxysilane, the amide product obtained by reacting an amino group-containing alkoxysilane with a polyisocyanate compound and amidating the reaction product, and (poly)silane compounds containing an isocyanurate ring. Of these, preferred are the amide product obtained by reacting an amino group-containing alkoxysilane with an epoxy group-containing alkoxysilane and a silylating agent and amidating the reaction product, and the reaction product of an amino group-containing alkoxysilane with a dicarboxylic anhydride.

Illustrative examples of component (E) used herein are described. Examples of the amino group-containing alkoxysilane include 3-aminopropyltrimethoxysilane, 3-aminopropyltriethoxysilane, 3-aminopropylmethyldimethoxysilane, 3-aminopropylmethyldiethoxysilane, N-(2-aminoethyl)-3-aminopropyltrimethoxysilane, N-(2-aminoethyl)-3-aminopropyltriethoxysilane, N-(2-aminoethyl)-3-aminopropylmethyldimethoxysilane, N-(2-aminoethyl)-3-aminopropylmethyldiethoxysilane, 3-(trimethoxysilylpropyl)aminopropyltrimethoxysilane, 3-(triethoxysilylpropyl)aminopropyltriethoxysilane, 2-(trimethoxysilylpropyl)aminoethyl-3-aminopropyltrimethoxysilane, 2-(triethoxysilylpropyl)aminoethyl-3-aminopropyltriethoxysilane, N-phenyl-3-aminopropyltrimethoxysilane, and N-vinylbenzyl-3-aminopropyltriethoxysilane, as well as hydrochloride salts thereof.

A typical amino group-containing di(alkoxysilane) is bis(trimethoxysilylpropyl)amine.

Examples of the amide group-containing alkoxysilane include ureidopropyltrimethoxysilane, ureidopropyltriethoxysilane, ureidopropylmethyldimethoxysilane, and ureidopropylmethyldiethoxysilane.

Examples of the dicarboxylic anhydride include maleic anhydride, phthalic anhydride, tetrahydrophthalic anhydride, hexahydrophthalic anhydride, methyl-substituted tetrahydrophthalic anhydride, methyl-substituted hexahydrophthalic anhydride, 3,6-endo-methylenetetrahydrophthalic anhydride, and methyl-substituted-3,6-endo-methylenetetrahydrophthalic anhydride.

Examples of the (poly)(meth)acrylic compound include alkyl methacrylates such as methyl methacrylate, butyl methacrylate and 2-ethylhexyl methacrylate, alkyl acrylates such as methyl acrylate, ethyl acrylate and butyl acrylate, as well as acrylamide, acrylonitrile, and ethylene glycol dimethacrylate.

Examples of the polyamine compound include ethylene diamine, diethylene triamine, triethylene triamine, tetraethylene pentamine, and piperazine.

Examples of the polyisocyanate compound include toluene diisocyanate, diphenylmethane diisocyanate, hexamethylene diisocyanate, 2,2,4-trimethylhexamethylene diisocyanate, 2,4,4-trimethylhexamethylene diisocyanate, p-phenylene diisocyanate, 4,4'-dicyclohexylmethane diisocyanate, 3,3'-dimethyldiphenyl-4,4'-diisocyanate, dianisidine diisocyanate, m-xylene diisocyanate, isophorone diisocyanate, 1,5-naphthalene diisocyanate, trans-1,4-cyclohexyl diisocyanate, lysine diisocyanate, dimethyltriphenylmethane tetraisocyanate, triphenylmethane triisocyanate, and tris(phenyl isocyanate)thiophosphate.

Examples of the (meth)acrylic group-containing alkoxysilane are as exemplified above for the alkoxysilyl group-containing acrylic monomer.

Examples of the silane compounds containing an isocyanurate ring include tris(trimethoxysilylpropyl)isocyanurate, bis(trimethoxysilylpropyl)allylisocyanurate, and tris(triethoxysilylpropyl)isocyanurate.

The process of obtaining the amide compound by reacting an amino group-containing alkoxysilane with an epoxy group-containing alkoxysilane and a silylating agent and amidating the reaction product is described below. The amino group-containing alkoxysilane is as exemplified above although N-(2-aminoethyl)-3-aminopropyltrimethoxysilane and N-(2-aminoethyl)-3-aminopropylmethyldimethoxysilane are preferred for adhesion and operation. The epoxy group-containing alkoxysilane used herein is not critical although γ-glycidoxypropyltrimethoxysilane, γ -glycidoxypropylmethyldimethoxysilane, and β -(3,4-epoxycyclohexyl)ethylmethyldimethoxysilane are preferred for reactivity and operation. Examples of the silylating agent include hexamethyldisilazane, N,N'-bis(trimethylsilyl)formamide and N,N'-bis(trimethylsilyl)urea. When the amino group-containing alkoxysilane reacts with the epoxy group-containing alkoxysilane, the silylating agent serves to protect the OH groups generated by the reaction, for preventing reaction between OH groups and alkoxysilyl groups, thereby precluding a change with time of the reaction product.

Reaction of the amino group-containing alkoxysilane with the epoxy group-containing alkoxysilane and the silylating agent may be effected by adding dropwise the epoxy group-containing alkoxysilane to a mixture of the amino group-containing alkoxysilane and the silylating agent and heating the mixture for reaction. Alternatively, the amino group-containing alkoxysilane is reacted with the epoxy group-containing alkoxysilane, and the silylating agent is added to the reaction product for further reaction. Although the reaction conditions may vary over a wide range, the preferred conditions include a temperature of 50 to 150°C, specifically 80 to 140°C, and a time of 1 to 12 hours, specifically 3 to 8 hours.

In this reaction, the amino group-containing alkoxysilane and the epoxy group-containing alkoxysilane are preferably used in such amounts that the molar ratio of epoxy groups to amino (=N-H) groups may range from 0.3/1 to 1.2/1. If the molar ratio of epoxy/amino is less than 0.3, only a less number of alkoxy groups per molecule participate in crosslinking, leading to short cure, and the entire molecule is not spread, leading to a weak surface bond. If the molar ratio of epoxy/amino is more than 1.2, amino (=N-H) groups which can be amidated during subsequent amidation step become few, exacerbating water-resistant adhesion.

The reaction product is then amidated. For amidation, the reaction product may be reacted with a carboxylic acid halide, acid anhydride or acid isopropenyl ester such as, for example, acetic chloride, acetic bromide, propionic chloride, acetic anhydride, isopropenyl acetate or benzoyl chloride.

The reaction product of an amino group-containing alkoxysilane with a dicarboxylic anhydride is obtained as follows. The amino group-containing alkoxysilane used herein is as exemplified above although 3-aminopropyltrimethoxysilane, 3-aminopropyltriethoxysilane and 3-aminopropylmethyldiethoxysilane are preferred for adhesion and stability. The dicarboxylic anhydride used herein is as exemplified above although tetrahydrophthalic anhydride, hexahydrophthalic anhydride, methyl-substituted tetrahydrophthalic anhydride, methyl-substituted hexahydrophthalic anhydride, 3,6-endo-methylenetetrahydrophthalic anhydride, and methyl-substituted-3,6-endo-methylenetetrahydrophthalic anhydride are preferred for adhesion and stability.

Reaction of the amino group-containing alkoxysilane with the dicarboxylic anhydride may be effected by adding dropwise the amino group-containing alkoxysilane to the dicarboxylic anhydride or vice versa, and keeping conditions for reaction to take place. Although the reaction conditions may vary over a wide range, the preferred conditions include a temperature of 0 to 150° C, specifically 20 to 120°C, and a time of 1 to 12 hours, specifically 2 to 8 hours.

In this reaction, the amino group-containing alkoxysilane and the dicarboxylic anhydride are preferably used in such amounts that the molar ratio of amino ($-NH_2$) groups to dicarboxylic anhydride may range from 0.3/1 to 1.8/1. If the molar ratio is less than 0.3, the reaction product contains only a less number of alkoxy groups participating in crosslinking, leading to short cure and a lowering of adhesion. If the molar ratio is more than 1.8, the primer composition may lose storage stability on account of amino groups on the unreacted amino group-containing alkoxysilane.

The organosilicon compound containing a nitrogen atom and an alkoxysilyl group in the molecule (E) is preferably compounded in such amounts that 0 to 50 parts by weight as solids of component (E) is present per 100 parts by weight of the resin or the vinyl polymer having hydrolyzable silyl groups and/or SiOH groups and organic UV-absorbing groups attached to side chains (A). The more preferred amount of component (E) is 0.1 to 20 parts by weight. If the amount of component (E) is above the range, then a coating layer of the primer composition may have too high a crosslinked density, that is, the coating may have poor adhesion to the underlying substrate or the overlying polysiloxane coating.

The primer composition of the invention may contain any suitable optional components e.g. as described below.

In the primer composition, a thermoplastic vinyl resin may be compounded. Inclusion of a thermoplastic vinyl resin can provide a primer composition coating with flexibility, prevent the primer composition coating from undergoing a phase change or softening phenomenon with changes of the ambient temperature, especially in the relatively high temperature range, and suppress any strain within the primer composition coating or at the interface with an overlying coating if laminated. As a result, it prevents the overlying coating, specifically organopolysiloxane protective coating

from cracking and imparts heat resistance and water resistance to the primer composition coating itself.

Preferably the thermoplastic resin is compounded in an amount of 0 to 50 parts by weight per 100 parts by weight of the effective component in the primer composition. Notably, the effective component as used herein refers to the total of components (A) and (B) calculated as solids. When the thermoplastic resin is used, the preferred amount is 1 to 50 parts by weight and more preferably 3 to 45 parts by weight. If more than 50 pbw of the thermoplastic resin is added, a coating may have a lower crosslinked density and hence a lower hardness.

In the primer composition, a light stabilizer having at least one cyclic hindered amine structure or hindered phenol structure in the molecule may be added. Inclusion of a light stabilizer improves weather resistance. The light stabilizer used herein should preferably be fully soluble in the solvent for the primer composition, compatible with the primer composition, and low volatile.

Illustrative examples of the light stabilizer include 3-dodecyl-1-(2,2,6,6-tetramethyl-4-piperidinyl)pyrrolidine-2,5-dione, N-methyl-3-dodecyl-1-(2,2,6,6-tetramethyl-4-piperidinyl)pyrrolidine-2,5-dione, N-acetyl-3-dodecyl-1-(2,2,6,6-tetramethyl-4-piperidinyl)pyrrolidine-2,5-dione, bis(2,2,6,6-tetramethyl-4-piperidyl) sebacate, bis(1,2,2,6,6-pentamethyl-4-piperidyl) sebacate, tetrakis(2,2,6,6-tetramethyl-4-piperidyl) 1,2,3,4-butanetetracarboxylate, tetrakis(1,2,2,6,6-pentamethyl-4-piperidyl) 1,2,3,4-butanetetracarboxylate, a condensate of 1,2,3,4-butane-tetracarboxylic acid with 2,2,6,6-tetramethyl-piperidinol and tridecanol, 8-acetyl-3-dodecyl-7,7,9,9-tetramethyl-1,3,8-triazaspiro[4,5]decane-2,4-dione, a condensate of 1,2,3,4-butanetetracarboxylic acid with 1,2,2,6,6-pentamethyl-4-piperidinol and β ,β,β,β'-tetramethyl-3,9-(2,4,8,10-tetraoxaspiro[5,5]undecane)diethanol, and a condensate of 1,2,3,4-butanetetracarboxylic acid with 1,2,2,6,6-pentamethyl-4-piperidinol and β ,β,β,β'-tetramethyl-3,9-(2,4,8,10-tetraoxaspiro[5,5]undecane)diethanol. For the purpose of fixing the light stabilizer, there may be also used silyl-modified light stabilizers as disclosed in JP-B 61-56187, for example, 2,2,6,6-tetramethylpiperidino-4-propyltrimethoxysilane, 2,2,6,6-tetramethylpiperidino-4-propylmethyldimethoxysilane, 2,2,6,6-tetramethylpiperidino-4-propyltriethoxysilane, and 2,2,6,6-tetramethylpiperidino-4-propylmethyldiethoxysilane as well as (partial) hydrolyzates thereof. These light stabilizers may be used in admixture of two or more.

In the primer composition, 0 to 10 parts by weight of the light stabilizer may be blended per 100 parts by weight of the effective component. When the light stabilizer is used, the preferred amount is 1 to 10 parts by weight. More than 10 pbw of the light stabilizer may detract from adhesion of a coating.

In the primer composition, an organic UV absorber may be added insofar as no detrimental effect is exerted. Suitable UV absorbers are organic UV absorbers compatible with the primer composition. Derivatives of compounds having a hydroxybenzophenone, benzotriazole, cyanoacrylate or triazine main skeleton are especially preferred. Also acceptable are polymers such as vinyl polymers having such a UV absorber incorporated on a side chain. Exemplary UV absorbers are 2,4-dihydroxybenzophenone, 2,2',4,4'-tetrahydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-4-n-dodecyloxybenzophenone, 2-hydroxy-4-n-benzyloxybenzophenone, 2,2'-dihydroxy-4,4'-dimethoxybenzophenone, 2,2'-dihydroxy-4,4'-diethoxybenzophenone, 2,2'-dihydroxy-4,4'-dipropoxybenzophenone, 2,2'-dihydroxy-4,4'-dibutoxybenzophenone, 2,2'-dihydroxy-4-methoxy-4'-propoxybenzophenone, 2,2'-dihydroxy-4-methoxy-4'-butoxybenzophenone, 2,3,4-trihydroxybenzophenone, 2-(2-hydroxy-5-t-methylphenyl)benzotriazole, 2-(2-hydroxy-5-t-octylphenyl)benzotriazole, 2-(2-hydroxy-3,5-di-t-butylphenyl)benzotriazole, ethyl-2-cyano-3,3-diphenyl acrylate, 2-ethylhexyl-2-cyano-3,3-diphenyl acrylate, and 2-(2-hydroxy-4-hexyloxyphenyl)-4,6-diphenyltriazine. These organic UV absorbers may be used in admixture of two or more.

A microparticulate functional metal oxide may be added to the primer composition as long as it does not adversely affect the composition. The microparticulate metal oxide used herein should preferably be compatible with and dispersible in the primer composition, and when a coating is formed from the primer composition, allow the coating to maintain a certain level of transparency without whitening. Examples include titanium oxide, cerium oxide, zinc oxide, tin oxide, zirconium oxide, antimony oxide, tungsten oxide, antimony-containing tin oxide, tin-containing indium oxide, iron oxide, and alumina, in microparticulate form of single or composite metal oxide, and mixtures thereof.

The microparticulate metal oxide may be compounded in an amount of 0 to 30 parts by weight per 100 parts by weight of the effective component in the primer composition. When the metal oxide is used, the preferred amount is 1 to 30 parts by weight. If more than 30 pbw of the metal oxide is added, the coating may become less transparent.

If desired, the primer composition is diluted with a solvent prior to use. Useful solvents include diacetone alcohol, propylene glycol monomethyl ether, ethylene glycol monomethyl ether, propylene glycol monoethyl ether, ethylene glycol monoethyl ether, isobutyl alcohol, isopropyl alcohol, n-butyl alcohol, n-propyl alcohol, acetone, methyl ethyl ketone, methyl isobutyl ketone, acetyl acetone, ethyl acetate, butyl acetate, xylene, and toluene. The primer composition is generally diluted with the solvent so as to form a solution typically containing 5 to 20% by weight of the effective component prior to use.

For leveling a coating, fluorochemical or silicone surfactants such as Fluorad FC-4430 (Sumitomo 3M Co., Ltd.) and KP-341 (Shin-Etsu Chemical Co., Ltd.) may be added in an effective amount. For promoting the cure of a coating, crosslinking/curing catalysts such as Neostann U-810 (Nitto Chemicals Co., Ltd.), B-7 (Nippon Soda Co., Ltd.),

and Orgatics ZA-60 and TC-200 (Matsumoto Fine Chemical Co., Ltd.) may be added in a catalytic amount.

By applying the primer composition solution to a surface of a pre-cleaned substrate such as plastic film, and evaporating the dilution solvent at room temperature or elevated temperature, a coating is formed preferably to a thickness of 0.5 to 20 μm, more preferably 1 to 15 μm. A coating of less than 0.5 μm may fail to provide desired weather resistance. A coating of more than 20 μm is inefficient to build up and may detract from the mechanical and,optical properties the resin substrate inherently possesses. When the solvent is evaporated off, the coating is preferably heated at a temperature in the range from room temperature to the heat resistant temperature of the substrate, specifically 50 to 140°C, for 1 minute to 3 hours, specifically 5 minutes to 2 hours. The application technique is not particularly limited although ordinary techniques such as roll coating, dip coating, flow coating, bar coating, spray coating and spin coating may be used.

By curing the primer composition in the above-mentioned way, a primer layer or coating having a coefficient of linear expansion (CE) equal to or less than $150 \times 10^{-6}$/°C, preferably equal to or less than $125 \times 10^{-6}$/°C can be formed. A coating with too high a CE undergoes larger motions like expansion and shrinkage so that it may facilitate a likelihood for the overlying polysiloxane hard coating to crack and may reduce interfacial adhesion. The lower limit of CE is not critical: generally the CE is at least 0/° C, and preferably at least $1 \times 10^{-6}$/°C. Note that the method of measuring CE is described later.

Molded plastic parts such as plastic films, and other substrates, provided with a cured coating of the primer composition of the invention are improved in initial adhesion, heat resistance, resistance to hot water, and weather resistance. In one embodiment of the invention, any e.g. well-known organopolysiloxane composition, typically an organopolysiloxane composition comprising a hydrolyzate or co-hydrolyzate of at least one organooxysilane having the general formula (2):

$$(R^7)_m Si(OR^8)_{4-m} \qquad (2)$$

wherein $R^7$ is an organic group having 1 to 10 carbon atoms, $R^8$ is hydrogen or a monovalent organic group, and m is 0, 1 or 2, is applied to the primer composition coating and heat cured, preferably at a temperature of 50 to 140°C for 5 minutes to 3 hours whereby the substrate e.g. molded plastic part is double coated with the primer composition and the organopolysiloxane composition. The primer coating and the organopolysiloxane coating act in synergism to improve adhesion and abrasion resistance as well as weather resistance.

The organopolysiloxane composition is preferably applied in such a buildup that a coating has a thickness of 0.2 to 20 μm, more preferably 0.5 to 15 μm at the end of heat curing. Too thin a coating may fail to provide the desired hardness and abrasion resistance whereas too thick a coating may crack after curing. The application technique is not particularly limited although ordinary techniques such as roll coating, dip coating, flow coating, bar coating, spray coating and spin coating may be used.

In formula (2), $R^7$ is an organic group which is typically selected from substituted or unsubstituted monovalent hydrocarbon groups of 1 to 10 carbon atoms, for example, alkyl groups, aryl groups, halogenated alkyl groups, halogenated aryl groups and alkenyl groups, and the foregoing hydrocarbon groups in which some of the hydrogen atoms are substituted with epoxy, (meth)acryloxy, mercapto, amino or cyano groups or which are separated by a hetero atom such as O, NH or $NCH_3$. Illustrative examples of suitable organic groups include alkyl groups such as methyl, ethyl, propyl, isopropyl, butyl, hexyl, decyl and cyclohexyl; aryl groups such as phenyl and phenethyl; halogenated alkyl groups such as 3-chloropropyl, 3,3,3-trifluoropropyl, 3,3,4,4,5,5,6,6,6-nonafluorohexyl; halogenated aryl groups such as p-chlorophenyl; alkenyl groups such as vinyl, allyl, 9-decenyl, and p-vinylbenzyl; epoxy group-containing organic groups such as 3-glycidoxypropyl, β -(3,4-epoxycyclohexyl)ethyl, and 9,10-epoxydecyl; (meth)acryloxy group-containing organic groups such as γ -methacryloxypropyl and γ-acryloxypropyl; mercapto group-containing organic groups such as γ-mercaptopropyl and p-mercaptomethylphenylethyl; amino group-containing organic groups such as γ-aminopropyl and (β-aminoethyl)-γ-aminopropyl; and cyano group-containing organic groups such as β-cyanoethyl.

$R^8$ is hydrogen or a monovalent organic group having 1 to 10 carbon atoms. Suitable organic groups include alkyl, alkenyl, alkoxyalkyl and acyl groups. Of these, the alkyl and acyl groups are preferred. Illustrative examples include methyl, ethyl, propyl, isopropyl, butyl, hexyl, phenyl, isopropenyl, methoxyethyl and acetyl.

Illustrative, non-limiting, examples of the silane compounds that satisfy the above conditions include trialkoxy or triacyloxysilanes such as methyltrimethoxysilane, methyltriethoxysilane, methyltris(2-methoxyethoxy)silane, methyltriacetoxysilane, methyltripropoxysilane, methyltriisopropenoxysilane, methyltributoxysilane, ethyltrimethoxysilane, ethyltriethoxysilane, vinyltrimethoxysilane, vinyltriethoxysilane, vinyltriacetoxysilane, vinyltris(2-methoxyethoxy)silane, vinyltriisopropenoxysilane, phenyltrimethoxysilane, phenyltriethoxysilane, phenyltriacetoxysilane, γ-chloropropyltrimethoxysilane, γ -chloropropyltriethoxysilane, γ -chloropropyltripropoxysilane, 3,3,3-trifluoropropyltrimethoxysilane, γ -glycidoxypropyltrimethoxysilane,γ -glycidoxypropylmethyldimethoxysilane, γ -glycidoxypropyltriethoxysilane, γ -glycidoxypropylmethyldiethoxysilane, β -(3,4-epoxycyclohexyl)ethyltrimethoxysilane, β-(3,4-epoxycyclohexyl)ethylmethyldimethoxysilane, β -(3,4-epoxycyclohexyl)ethyltriethoxysilane, β -(3,4-epoxycyclohexyl)ethylmethyldiethoxysilane, γ -methacryloxypropyltrimethoxysilane, γ -acryloxypropyltrimethoxysilane, γ-aminopropyltrimethoxysilane, γ-aminopropyltriethoxysilane, γ -mercaptopropyltrimethoxysilane, γ -mercaptopropyltriethoxysilane, N-(β-aminoethyl)-γ-aminopropyltrimethoxysilane, and β -cyanoethyltrimethoxysilane;
dialkoxysilanes or diacyloxysilanes such as dimethyldimethoxysilane, dimethyldiethoxysilane, dimethyldi(2-methoxyethoxy)silane, dimethyldiacetoxysilane, dimethyldipropoxysilane, dimethyldiisopropenoxysilane, dimethyldibutoxysilane, vinylmethyldimethoxysilane, vinylmethyldiethoxysilane, vinylmethyldiacetoxysilane, vinylmethyldi(2-methoxyethoxy)silane, vinylmethyldiisopropenoxysilane, phenylmethyldimethoxysilane, phenylmethyldiethoxysilane, phenylmethyldiacetoxysilane, γ -propylmethyldimethoxysilane, γ -propylmethyldiethoxysilane, γ-propylmethyldipropoxysilane, 3,3,3-trifluoropropylmethyldimethoxysilane, γ -methacryloxypropylmethyldimethoxysilane, γ -acryloxypropylmethyldimethoxysilane, γ -aminopropylmethyldimethoxysilane, γ-aminopropylmethyldiethoxysilane, γ -mercaptopropylmethyldimethoxysilane, γ -mercaptopropylmethyldiethoxysilane, N-(β-aminoethyl)-γ-aminopropylmethyldimethoxysilane, and β -cyanoethylmethyldimethoxysilane;
tetraalkoxysilanes such as methyl silicate, ethyl silicate, n-propyl silicate, n-butyl silicate, sec-butyl silicate, and t-butyl silicate; and
bissilane compounds such as bis(trimethoxysilyl)ethane, bis(trimethoxysilyl)hexane, bis(trimethoxysilyl)decane, bis(triethoxysilyl)hexane, bis(trimethoxysilyl)benzene, and bis(trimethoxysilyloxydimethylsilyl)benzene.

Also useful are (co)hydrolyzates of these silane compounds. These silane compounds and/or (co)hydrolyzates thereof may be used alone or in admixture of two or more.

The (co)hydrolyzates of the above silane compounds are obtained, for example, by adding water to a lower alcohol solution of the silane compound(s) in the presence of an acid catalyst and effecting hydrolysis. Exemplary lower alcohols are methanol, ethanol, isopropanol and butanol. Solvents compatible with these alcohols include ketones such as acetone and acetylacetone, esters such as ethyl acetate and isobutyl acetate, and ethers such as propylene glycol monomethyl ether, dipropylene glycol monomethyl ether, and diisopropyl ether.

For improving mar resistance, it is preferred to apply a colloidal silica-laden organopolysiloxane composition in which 5 to 70% by weight of colloidal silica (obtained by dispersing silica fines having a particle size of about 1 to 100 nm in water or an alcohol such as methanol, ethanol, isobutanol or propylene glycol monomethyl ether) is added to the above organopolysiloxane composition.

As to the addition of colloidal silica, it may be simply added to the organopolysiloxane composition or it may be premixed with the above-mentioned silane compound(s) prior to hydrolysis. In the latter case, if water-dispersed colloidal silica is used, the water in the water-dispersed colloidal silica may be utilized as part or all of the water necessary for the hydrolysis of silane compounds.

A UV absorber may be added to the organopolysiloxane composition. Suitable UV absorbers include inorganic UV absorbers, for example, single or compound metal oxides in microparticulate form, such as titanium oxide, cerium oxide, zinc oxide, tin oxide, zirconium oxide, antimony oxide, tungsten oxide, antimony-containing tin oxide, tin-containing indium oxide, iron oxide, silica, and alumina, and mixtures thereof; metal chelate compounds of titanium, zinc and zirconium, (partial) hydrolyzates and condensates thereof; organic UV absorbers, for example, derivatives of compounds having a hydroxybenzophenone, benzotriazole, cyanoacrylate or triazine main skeleton, and vinyl polymers having such a UV absorber incorporated on a side chain. Also, a curing catalyst may be added in a catalytic amount to the organopolysiloxane composition. The curing catalyst is selected from quaternary ammonium salts, alkali metal salts of organic acids, alkoxides and chelates of aluminum, titanium, chromium and iron, perchlorates, acid anhydrides, polyamines, and Lewis acids, though not limited thereto.

The primer composition of the invention is advantageously applicable to a variety of plastic materials. The plastic substrates include those of polycarbonate, polystyrene, (meth)acrylic resins, urethane resins, thiourethane resins, polycondensates of halogenated bisphenol A and ethylene glycol, acrylic urethane resins, halogenated aryl group-containing acrylic resins, and sulfur-containing resins. The composition is also applicable to composite multilayer articles including two or more layers of these resins.

Transparent plastics materials thus coated with a polysiloxane hard coating can have excellent optical properties and find use as optical materials.

## EXAMPLE

Examples of the invention are given below by way of illustration and not by way of limitation. All parts and percents are by weight. The viscosity is measured at 25°C according to JIS Z-8803. The weight average molecular weight (Mw) is measured by gel permeation chromatography (GPC) versus polystyrene standards. [Synthesis of (A) vinyl polymer having hydrolyzable silyl groups and/or SiOH groups and organic UV-absorbing groups attached to side chains]

Synthesis Example 1

A 2-liter flask equipped with a stirrer, condenser and thermometer was charged with 152 g of diacetone alcohol as the solvent and heated at 80°C in a nitrogen stream. To the flask were sequentially admitted a 240 g portion of a monomer mixture which had been previously prepared from 67.5 g of 2-[2'-hydroxy-5'-(2-methacryloxyethyl)phenyl]-2H-benzotriazole (RUVA-93 by Otsuka Chemical Co., Ltd.), 90 g of $\gamma$ -methacryloxypropyltrimethoxysilane, 270 g of methyl methacrylate, 22.5 g of glycidyl methacrylate, and 350 g of diacetone alcohol, and a 54 g portion of a solution which had been previously prepared by dissolving 2.3 g of 2,2'-azobis(2-methylbutyronitrile) as the polymerization initiator in 177.7 g of diacetone alcohol. Reaction was effected at 80°C for 30 minutes, after which the remainder of the monomer mixture and the remainder of the polymerization initiator solution were simultaneously added dropwise at 80-90°C over 1.5 hours. The reaction solution was stirred at 80-90°C for a further 5 hours.

The resulting vinyl polymer having trimethoxysilyl groups and organic UV-absorbing groups attached to side chains had a viscosity of 5,050 mPa-s, the content of UV-absorbing monomer was 15% of the copolymer, and the content of vinyl monomer having a trimethoxysilyl group linked to a side chain via a C-Si linkage was 20% of the copolymer. The copolymer had a weight average molecular weight (Mw) of 60,800 as measured by GPC using polystyrene standards. This vinyl polymer (solution) is designated A-1.

Synthesis Examples 2, 3 and Comparative Synthesis Examples 1, 2

Vinyl polymers, designated A-2 and A-3, and comparative vinyl polymers, designated RA-1 and RA-2, were prepared as in Synthesis Example 1 according to the formulation reported in Table 1.

[Synthesis of (B) organopolysiloxane]

Synthesis Example 4

A 2-liter flask equipped with a stirrer, condenser and thermometer was charged with 338 g of methyltrimethoxysilane and with stirring, maintained at 20°C. To the flask, 98 g of water-dispersed colloidal silica (Snowtex O with an average particle size of 15-20 nm, Nissan Chemical Industries Ltd., $SiO_2$ content 20%) and 230 g of a 0.25N aqueous acetic acid solution were added, and the contents were stirred for 3 hours. Stirring was continued at 60°C for a further 3 hours, after which 300 g of cyclohexanone was added, and byproduct methanol was distilled off under atmospheric pressure. Then 300 g of isopropanol and 134 g of an isopropanol solution of 0.25% tetrabutylammonium hydroxide were added. The solution was further adjusted with isopropanol to a nonvolatile content of 20% as measured according to JIS K-6833. The organopolysiloxane solution thus obtained had a viscosity of 4.1 $mm^2/s$ and a Mw of 2,500 as measured by GPC. This is designated organopolysiloxane B-1.

Synthesis Example 5

A 2-liter flask equipped with a stirrer, condenser and thermometer was charged with 302 g of methyltrimethoxysilane and 97 g of $\gamma$-glycidoxypropylmethyldiethoxysilane, and with stirring, maintained at 20°C. To the flask, 308 g of a 0.25N aqueous acetic acid solution was added, and the contents were stirred for 3 hours. Stirring was continued at 60°C for a further 3 hours, after which 300 g of cyclohexanone was added, and byproduct methanol was distilled off under atmospheric pressure. Then 300 g of isopropanol and 45 g of an isopropanol solution of 0.25% tetrabutylammonium hydroxide were added. The solution was further adjusted with isopropanol to a nonvolatile content of 20% as measured according to JIS K-6833. The organopolysiloxane solution thus obtained had a viscosity of 4.5 $mm^2/s$ and a Mw of 2,350 as measured by GPC. This is designated organopolysiloxane B-2.

[Synthesis of (E) organosilicon compound having a nitrogen atom and an alkoxysilyl group in the molecule]

Synthesis Example 6

A 2-liter flask equipped with a stirrer, condenser and thermometer was charged with 222 g of N-(2-aminoethyl)-3-aminopropyltrimethoxysilane and 242 g of hexamethyldisilazane as the silylating agent and heated at 120°C in a nitrogen stream. Then 496 g of $\gamma$-glycidoxypropylmethyldiethoxysilane was added dropwise to the solution, which was heated and stirred at 120°C for 5 hours for reaction. A low-boiling fraction was removed at 100°C under reduced pressure, obtaining 862 g of a viscous product having a viscosity of 1,387 mPa-s.

Next, a 2-liter flask equipped with a stirrer, condenser and thermometer was charged with 862 g of the reaction product and 862 g of toluene. Under a nitrogen stream, 143 g of acetic anhydride was added dropwise to the solution

at room temperature. The solution was heated and stirred at 110°C for 2 hours for reaction. Then 141 g of methanol was added dropwise to the solution at 50°C, followed by heating and stirring at 50°C for 1 hour. A low-boiling fraction was removed at 100°C under reduced pressure, obtaining a reddish brown, clear, highly viscous compound.

On IR absorption spectroscopy of this compound, no absorption peaks attributable to OH or NH group appeared in the region of 3,000 $cm^{-1}$ or greater, whereas a strong absorption attributable to amide group was found at 1,650 $cm^{-1}$.

The compound was diluted with propylene glycol monomethyl ether (PGM) to a nonvolatile content of 25% (JIS K-6833). This nitrogen/alkoxysilyl group-containing compound (solution) is designated E-1.

[Synthesis of organopolysiloxane based hard coating composition]

Synthesis Example 7

A 1-liter flask equipped with a stirrer, condenser and thermometer was charged with 336 g of methyltriethoxysilane and 94 g of isobutanol and maintained below 5°C with stirring under ice cooling. To the flask, 283 g of water-dispersed colloidal silica (Snowtex O with an average particle size of 15-20 nm, Nissan Chemical Industries Ltd., $SiO_2$ content 20%) below 5°C was added. The contents were stirred under ice cooling for 3 hours and at 20-25°C for a further 12 hours. Then 27 g of diacetone alcohol and 50 g of propylene glycol monomethyl ether were added, and subsequently, 3 g of a 10% sodium propionate aqueous solution and 0.2 g of polyether-modified silicone KP-341 (Shin-Etsu Chemical Co., Ltd.) as the leveling agent were added. The solution was adjusted to pH 6-7 with acetic acid and further adjusted with isopropanol to a nonvolatile content of 20% (JIS K-6833). Subsequent aging at room temperature for 5 days resulted in an organopolysiloxane based hard coating composition having a viscosity of 4.2 $mm^2/s$ and a Mw of 1,100 as measured by GPC. This is designated organopolysiloxane based hard coating composition HC-1.

Synthesis Example 8

A 2-liter flask equipped with a stirrer, condenser and thermometer was charged with 328 g of methyltrimethoxysilane and 10 g of 3,3,3-trifluoropropyltrimethoxysilane and with stirring, maintained at 20°C. To the flask, 98 g of water-dispersed colloidal silica (Snowtex O with an average particle size of 15-20 nm, Nissan Chemical Industries Ltd., $SiO_2$ content 20%) and 230 g of a 0.25N acetic acid aqueous solution were added, and the contents were stirred for 3 hours. Stirring was continued at 60°C for a further 3 hours. Then 300 g of cyclohexanone was added and byproduct methanol was distilled off under atmospheric pressure. Then 300 g of isopropanol, 134 g of an isopropanol solution of 0.25% tetrabutylammonium hydroxide, and 0.5 g of polyether-modified silicone KP-341 (Shin-Etsu Chemical Co., Ltd.) as the leveling agent were added. The solution was further adjusted with isopropanol to a nonvolatile content of 20% (JIS K-6833). The resulting organopolysiloxane based hard coating composition had a viscosity of 4.3 $mm^2/s$ and a Mw of 2,300 as measured by GPC. This is designated organopolysiloxane based hard coating composition HC-2.

Table 1

| Composition of (A) vinyl polymer having alkoxysilyl groups and organic UV-absorbing groups attached to side chains (Unit: parts by weight) | | | | | |
|---|---|---|---|---|---|
| Synthesis Example | Synthesis Example | | | Comparative Synthesis Example | |
| | 1 | 2 | 3 | 1 | 2 |
| Vinyl polymer | A-1 | A-2 | A-3 | RA-1 | RA-2 |
| MPTMS | 90 | 45 | 135 | 90 | |
| RUVA-1 | 67.5 | 45 | | | 67.5 |
| RUVA-2 | | | 112 | | |
| MMA | 270 | 285 | 203 | 337.5 | 355 |
| GMA | 22.5 | 45 | | 22.5 | 22.5 |
| VIAc | | 25 | | | |
| MHALS | | 5 | | | 5 |
| Total charge | 450 | 450 | 450 | 450 | 450 |

Note:

MPTMS: γ-methacryloxypropyltrimethoxysilane
RUVA-1: 2-[2'-hydroxy-5'-(2-methacryloxyethyl)phenyl]-2H-benzotriazole
(RUVA-93 by Otsuka Chemical Co., Ltd.)
RUVA-2: 2-hydroxy-4-(2-acryloxyethyl)benzophenone
(BP-1A by Osaka Organic Chemical Industry Ltd.)
MMA: methyl methacrylate
GMA: glycidyl methacrylate
ViAc: vinyl acetate
MHALS: 1,2,2,6,6-pentamethyl-4-piperidyl methacrylate

Examples of the primer composition according to the invention are given below together with Comparative Examples. The abbreviations other than those in Synthesis Examples have the following meaning.

Thermoplastic resin

POL-1: 40% diacetone alcohol solution of poly(methyl methacrylate) resin
(Dianal BR-80 by Mitsubishi Rayon Co., Ltd.)

Organic UV absorbers

UVA-1: 2-[2-hydroxy-4-(1-octyloxycarbonylethoxy)phenyl]-4,6-bis(4-phenylphenyl)-1,3,5-triazine
(Tinuvin 479 by Ciba Specialty Chemicals)
WA-2: 2,2',4,4'-tetrahydroxybenzophenone
(Seasoap 106 by Sipro Chemical Co., Ltd.)

Inorganic UV absorber

UVA-3: 15% alcohol dispersion of microparticulate zinc oxide
(ZNAP 15 wt%, CI Chemicals Co., Ltd.)

Hindered amine light stabilizer

HALS-1: N-acetyl-3-dodecyl-1-(2,2,6,6-tetramethyl-4-piperidinyl)pyrrolidine-2,5-dione
(Sanduvor 3058 liquid by Clariant)

In Examples, physical properties were measured and rated by the following tests.

Tests were carried out on a cured coating of the primer composition alone as well as a laminate (or coated sample) obtained by sequentially applying and curing the primer composition and the organopolysiloxane based hard coating composition to a substrate.

(1) Gel fraction

A glass plate was dip coated with the primer composition, which was cured at 135°C for one hour. The sample was allowed to cool, after which the weight of the initial cured primer coating was measured. The cured primer coating was immersed in acetone at room temperature for one hour and then dried at 105°C for one hour, after which the weight of the cured primer coating as acetone extracted was measured again. A gel fraction is calculated as follows.

$$\text{Gel fraction (\%)} = (\text{weight of cured coating as acetone extracted}) / (\text{weight of initial cured coating}) \times 100$$

(2) Coefficient of linear expansion

A 1.5-g portion of the primer composition was weighed in an aluminum cup and held at room temperature for 8 hours for allowing the volatile matter to volatilize off. It was cured by heating on a hot plate at 80°C for one hour, then at 130°C for one hour. The cured primer coating was allowed to cool to room temperature and peeled from the aluminum

cup. A test strip of 15 mm x 5 mm x ~150 μm (thick) was punched out and a coefficient of linear expansion (CE) was measured by an analyzer.

| | |
|---|---|
| Analyzer: | TMA7000 (thermomechanical analyzer by ULVAC Riko Inc.) |
| Temperature: | range 25-150°C, ramp 5°C/min |
| Load: | 5 g |
| Atmosphere: | air |
| Measurement: | 3 times, an average of measurement values in the temperature range of 35 to 45°C |

(3) Initial coating appearance

A coated sample was obtained by sequentially applying and curing the primer composition and the organopolysiloxane based hard coating composition to a substrate and its outer appearance was visually observed.

(4) Primary adhesion

An adhesive tape test was carried out on a coated sample according to JIS K-5400 by scribing the sample with a razor along six spaced 2-mm apart orthogonal lines to define 25 square sections in the coating, closely pressing a commercially available adhesive tape thereto, and quickly peeling the adhesive tape by an angle of 90 degrees. The number (X) of remaining (not peeled) coating sections is expressed as X/25.

(5) Water resistance and adhesion after water immersion

The coated sample was immersed in boiling water for 2 hours, after which the outer appearance was visually observed and the adhesive tape test was carried out as in (4).

(6) Marring test

Using a Taber abrader equipped with an abrasive wheel CS-10F, the sample was rotated under a load of 500 g according to ASTM 1044. After 500 revolutions, the sample was measured for haze. A Taber abrasion (%) or mar resistance was calculated as the haze after test minus the haze prior to test.

(7) Weathering test

Using a Eye Super UV Tester by Iwasaki Electric Co., Ltd., a weathering test was carried out. One cycle consisted of 5 hour holding at black panel temperature 63°C, relative humidity 50%, illuminance 50 mW/cm$^2$, and raining 10 seconds/hour, and 1 hour holding at black panel temperature 30°C and relative humidity 95%. The weathering cycles were repeated over 250 hours and 500 hours. Before and after the test, a yellowing factor was determined according to JIS K-7103. The sample was observed with naked eyes and under a microscope (x250) to examine whether the weather resistant coating cracked or separated.

Coating cracks

The outer appearance of the coating after the weathering test was evaluated according to the following criterion.

○: sound
Δ: a few cracks
×: cracks over entire coating

Coating separation

The state of the coating after the weathering test was evaluated according to the following criterion.

○: sound
Δ1: partial separation between the organopolysiloxane based hard coating composition layer and the primer composition layer
Δ2: partial separation between the primer composition layer and the substrate

X1: overall separation between the organopolysiloxane based hard coating composition layer and the primer composition layer
×2: overall separation between the primer composition layer and the substrate

Examples 1 to 3 & Comparative Examples 1 to 3

Primer compositions were prepared by mixing the components according to the formulation (as solids) shown in Tables 2 and 3 and diluting the mixture with a mixed solvent of diacetone alcohol and propylene glycol monomethyl ether in a weight ratio of 20/80 to a total solids concentration of 10%.

Each primer composition was applied onto a cleaned surface of a polycarbonate resin sheet of 0.5 mm thick (Iupilon Sheet by Mitsubishi Engineering-Plastics Corp.) by the dip coating method and cured at 135°C for 30 minutes, obtaining a cured primer coating of about 6 to 8 μm thick. Each of the colloidal silica-laden organopolysiloxane coating compositions (HC-1 to 2) prepared in Synthesis Examples 5 and 6, to which a UV absorber (UVA-2 or 3) was optionally added, was applied onto the primer coating by the dip coating method and cured at 135°C for one hour, obtaining a cured coating of about 2 to 3 μm thick. The thus coated sheets, i.e., samples were examined by the above-mentioned tests. The test results are shown in Tables 2 and 3.

Examples 4 and 5

Primer compositions were prepared by mixing the components according to the formulation (as solids) shown in Table 2 and diluting the mixture with a mixed solvent of diacetone alcohol and propylene glycol monomethyl ether in a weight ratio of 20/80 to a total solids concentration of 10%. The compositions were heated at 60°C for 3 hours for reaction of vinyl polymer (A) with organopolysiloxane (B), yielding compositions containing composite (C). The compositions thus obtained were used in coating. Cured coatings of the primer compositions and coated samples were prepared as in Examples 1 to 3, followed by the same tests. The results are also shown in Table 2.

Comparative Example 4

A primer composition was prepared by mixing the components according to the formulation (as solids) shown in Table 3 and diluting the mixture with a mixed solvent of diacetone alcohol and propylene glycol monomethyl ether in a weight ratio of 20/80 to a total solids concentration of 10%. The composition was heated at 60°C for 3 hours for reaction of vinyl polymer (A) with organosilicon compound having nitrogen and alkoxysilyl group (E), yielding a composite-containing composition. The composition thus obtained was used in coating. A cured coating of the primer composition and a coated sample were prepared as in Examples 1 to 5, followed by the same tests. The results are also shown in Table 3.

Table 2

| Formulation (as solids) and Coating's properties | | | | | |
|---|---|---|---|---|---|
| | Example | | | | |
| | 1 | 2 | 3 | 4 | 5 |
| A. Vinyl polymer having alkoxysilyl and UV-absorbing groups | A-1 100 pbw | A-2 100 pbw | A-3 100 pbw | A-1 100 pbw | A-1 100 pbw |
| B. Organopolysiloxane | B-1 8 pbw | B-2 10 pbw | B-2 100 pbw 18 | B-1 pbw 35 | B-1 pbw |
| E. Organosilicon compound having N and alkoxysilyl | | E-1 2 pbw | | E-1 1 pbw | |
| Thermoplastic resin | | | POL-1 40 pbw | | POL-1 5 pbw |
| Additive | | HALS-1 1 pbw | | UVA-1 3 pbw | |
| Organopolysiloxane hard coating composition | HC-2 100 pbw | HC-2 100 pbw | HC-1 100 pbw | HC-2 100 pbw | HC-1 100 pbw |

(continued)

| Formulation (as solids) and Coating's properties | | | | | | |
|---|---|---|---|---|---|---|
| | | Example | | | | |
| | | 1 | 2 | 3 | 4 | 5 |
| Additive | | | UVA-3 1 pbw | | UVA-2 2 pbw | |
| Test results | | | | | | |
| Heating for composite formation | | No | No | No | Yes | Yes |
| Gel fraction of cured coating, % | | 84 | 91 | 90 | 97 | 98 |
| CE, $\times 10^{-6}$/°C | | 82 | 106 | 41 | 80 | 32 |
| Initial coating appearance | | sound | sound | sound | sound | sound |
| Primary adhesion | | 25/25 | 25/25 | 25/25 | 25/25 | 25/25 |
| Appearance after water immersion | | sound | sound | sound | sound | sound |
| Adhesion after water immersion | | 25/25 | 25/25 | 25/25 | 25/25 | 25/25 |
| Mar resistance, % | | 3 | 5 | 2 | 4 | 3 |
| Weather resistance after 250 hr | Yellowing factor | <1 | <1 | <1 | <1 | <1 |
| | Coating cracks | ○ | ○ | ○ | ○ | ○ |
| | Coating separation | ○ | ○ | ○ | ○ | ○ |
| Weather resistance after 500 hr | Yellowing factor | 4 | 6 | 4 | 5 | 3 |
| | Coating cracks | ○ | ○ | ○ | ○ | ○ |
| | Coating separation | ○ | ○ | ○ | ○ | ○ |

Table 3

| Formulation (as solids) and Coating's properties | | | | |
|---|---|---|---|---|
| | Comparative Example | | | |
| | 1 | 2 | 3 | 4 |
| A. Vinyl polymer having alkoxysilyl and UV-absorbing groups | RA-1 100 pbw | RA-2 100 pbw | A-1 100 pbw | A-2 100 pbw |
| B. Organopolysiloxane | B-1 8 pbw | B-1 18 pbw | | |
| E. Organosilicon compound having N and alkoxysilyl | | | | E-1 5 pbw |
| Thermoplastic resin | | | | |
| Additive | | | | HALS-1 1 pbw |
| Organopolysiloxane hard coating composition | HC-1 100 pbw | HC-2 100 pbw | HC-1 100 pbw | HC-1 100 pbw |
| Additive | | | UVA-1 2 pbw | |
| Test results | | | | |
| Heating for composite formation | No | No | No | Yes |

(continued)

| Formulation (as solids) and Coating's properties | | | | | |
|---|---|---|---|---|---|
| | | Comparative Example | | | |
| | | 1 | 2 | 3 | 4 |
| Gel fraction of cured coating, % | | 75 | 47 | 36 | 90 |
| CE, $\times 10^{-6}$/°C | | 90 | 145 | 230 | 186 |
| Initial coating appearance | | sound | sound | sound | sound |
| Primary adhesion | | 25/25 | 25/25 | 25/25 | 25/25 |
| Appearance after water immersion | | sound | faintly white turbid | faintly white turbid | sound |
| Adhesion after water immersion | | 25/25 | 15/25 | 25/25 | 25/25 |
| Mar resistance, % | | 3 | 6 | 4 | 2 |
| Weather resistance after 250 hr | Yellowing factor | 6 | 3 | 2 | 2 |
| | Coating cracks | ○ | × | Δ | ○ |
| | Coating separation | Δ2 | ×1 | ○ | ○ |
| Weather resistance after 500 hr | Yellowing factor | 22 | - | 16 | 9 |
| | Coating cracks | × | - | × | Δ |
| | Coating separation | × 2 | - | ×1,2 | Δ1 |

In respect of numerical ranges disclosed herein it will of course be understood that in the normal way the technical criterion for the upper limit is different from the technical criterion for the lower limit, i.e. the upper and lower limits are intrinsically distinct proposals.

## Claims

1. A primer composition suitable for priming for a polysiloxane outer coat, comprising

(A) vinyl polymer having hydrolysable silyl groups and/or SiOH groups and organic UV-absorbing groups attached to side chains, and
(B) organopolysiloxane of the general formula (1):

$$(R)_aSi(Y)_bO_{(4-a-b)/2} \qquad (1)$$

wherein

each R independently is a substituted or unsubstituted monovalent hydrocarbon group of 1 to 18 carbon atoms excluding amino-containing monovalent hydrocarbon groups, being selected from alkyl, aryl, haloalkyl, haloaryl, alkenyl, substituted forms of the foregoing in which one or more hydrogen atoms are replaced by epoxy, (meth)acryloxy or mercapto group, and wherein the hydrocarbon group may be interrupted by O or S,
each Y independently is hydroxyl group, alkoxy group of 1 to 3 carbon atoms, alkoxyalkoxy group of 2 to 4 carbon atoms, acyloxy group of 1 to 6 carbon atoms, alkenoxy group of 1 to 6 carbon atoms, or isocyanate group, the subscripts "a" and "b" are numbers satisfying $0 < a < 2$, $0 < b < 3$ and $0 < a+b < 4$,
the amounts of component (B) being from 0.1 to 100 parts by weight solids per 100 parts by weight of (A);
said primer composition being curable to form a layer having a coefficient of linear expansion equal to or less than $150 \times 10^{-6}$/°C.

2. A primer composition for a polysiloxane outer coat, comprising a composite (C) obtained through reaction of vinyl polymer (A) having hydrolysable silyl groups and/or SiOH groups and organic UV-absorbing groups attached to

side chains with organopolysiloxane (B) as set forth in claim 1, said primer composition being curable to form a layer having a coefficient of linear expansion equal to or less than $150x10^{-6}/°C$.

**3.** A primer composition according to claim 1 or 2 in which the groups R in component (B) are selected from alkyl groups, epoxy-substituted hydrocarbon groups and (meth)acryloxy-substituted hydrocarbon groups.

**4.** A primer composition according to claim 3 in which groups R in component (B) are selected from methyl group and epoxy-substituted hydrocarbon groups.

**5.** A primer composition according to any one of the preceding claims in which the organopolysiloxane (B) contains SiOH groups in the molecule.

**6.** A primer composition of any one of the preceding claims wherein the vinyl polymer (A) having hydrolysable silyl groups and/or SiOH groups and organic UV-absorbing groups attached to side chains is obtained through copolymerisation of monomeric components including (a) vinyl monomer having a hydrolysable silyl group and/or SiOH group linked thereto through a C-Si linkage, (b) vinyl monomer having an organic UV-absorbing group, and (c) other monomer copolymerisable therewith.

**7.** A primer composition according to claim 6 in which said monomeric components of the vinyl polymer (A) comprise 1 to 50% by weight of the vinyl monomer (a), 1 to 30% by weight of the vinyl monomer (b) and 20 to 98% by weight of said other monomer (c).

**8.** A primer composition according to claim 6 or 7 in which vinyl monomer (a) is selected from methacryloxypropyltrimethoxysilane, methacryloxypropylmethyldimethoxysilane, methacryloxypropyldimethylmethoxysilane, acryloxypropyltrimethoxysilane and acryloxypropylmethyldimethoxysilane, and vinyl monomer (b) is selected from (meth)acrylic monomers having a benzotriazole or benzophenone group.

**9.** A primer composition of any one of the preceding claims wherein the organopolysiloxane (B) has a weight average molecular weight of at least 1,000.

**10.** A primer composition of any one of the preceding claims further comprising (D) colloidal silica e.g. added with the organopolysiloxane (B).

**11.** A primer composition of any one of the preceding claims, further comprising (E) organosilicon compound having a nitrogen atom and an alkoxysilyl group in the molecule.

**12.** A method comprising the preparation of a primer composition according to any one of claims 1 to 11 by combining the mentioned components thereof, optionally with preliminary preparation of vinyl polymer (A) from monomeric components according to claim 6.

**13.** A method of preparing a coated article, comprising applying a primer composition according to any one of claims 1 to 11 to a substrate surface, e.g. in a dilution solvent, to form a primer coating, and applying a polysiloxane-based coating composition to form a polysiloxane coat overlying the primer coating.

**14.** A method according to claim 13 in which the polysiloxane coat is a hard coat formed from a hard coating composition comprising a hydrolysate or cohydrolysate of at least one organooxysilane having the formula (2):

$$(R^7)_mSi(OR^8)_4\text{-m} \qquad (2)$$

wherein $R^7$ is an organic group of 1 to 10 carbon atoms, $R^8$ is hydrogen or monovalent organic group, and m is 0, 1 or 2, and colloidal silica.

**15.** A method according to claim 13 or 14 in which the substrate is a plastics layer, e.g. of polycarbonate, polystyrene, (meth)acrylic resin, urethane resin, thiourethane resin, polycondensates of halogenated bisphenol A and ethylene glycol, acrylic resin or sulfur-containing resins.

**16.** A coated article comprising a substrate, a primer coating formed on the substrate by applying and curing a primer composition of any one of claims 1 to 11, and a polysiloxane hard coat overlying the primer coating.

17. A coated article of claim 16 wherein the polysiloxane hard coat is formed from a hard coating composition comprising a hydrolysate or cohydrolysate of at least one organooxysilane having the formula (2):

$$(R^7)_mSi(OR^8)_{4-m} \qquad (2)$$

wherein $R^7$ is an organic group of 1 to 10 carbon atoms, $R^8$ is hydrogen or a monovalent organic group, and m is 0, 1 or 2, and colloidal silica.

**Patentansprüche**

1. Primer-Zusammensetzung, die zum Primen einer Polysiloxan-Außenbeschichtung geeignet ist und Folgendes umfasst:

(A) ein Vinylpolymer mit hydrolysierbaren Silylgruppen und/oder SiOH-Gruppen und UV-absorbierenden organischen Gruppen, die an Seitenketten gebunden sind, und
(B) ein Organopolysiloxan der allgemeinen Formel (1):

$$(R)_aSi(Y)_bO_{(4-a-b)/2} \qquad (1)$$

worin die R jeweils unabhängig voneinander eine substituierte oder unsubstituierte einwertige Kohlenwasserstoffgruppe mit 1 bis 18 Kohlenstoffatomen, mit Ausnahme von aminohältigen einwertigen Kohlenwasserstoffgruppen, sind und aus Alkyl, Aryl, Halogenalkyl, Halogenaryl, Alkenyl und substituierten Formen der zuvor angeführten ausgewählt sind, in denen ein oder mehrere Wasserstoffatome durch Epoxy-, (Meth)-acryloxy- oder Mercaptogruppen ersetzt sind, und worin die Kohlenwasserstoffgruppe gegebenenfalls durch O oder S unterbrochen ist;
die Y jeweils unabhängig voneinander eine Hydroxylgruppe, Alkoxygruppe mit 1 bis 3 Kohlenstoffatomen, Alkoxyalkoxygruppe mit 2 bis 4 Kohlenstoffatomen, Acyloxygruppe mit 1 bis 6 Kohlenstoffatomen, Alkenoxygruppe mit 1 bis 6 Kohlenstoffatomen oder Isocyanatgruppe sind; die Indizes "a" und "b" Zahlen sind, für die gilt: $0<a<2,0<b<3$ und $0<a+b<4$,
wobei die Menge an Komponente (B) 0,1 bis 100 Gewichtsteile Feststoffe pro 100 Gewichtsteile von (A) beträgt;
wobei die Primer-Zusammensetzung härtbar ist, um eine Schicht mit einem linearen Expansionskoeffizienten von $150x10^{-6}$/°C oder weniger zu bilden.

2. Primer-Zusammensetzung für eine Polysiloxanaußenbeschichtung, die einen Verbundstoff (C) umfasst, der durch Umsetzen von Vinylpolymer (A), das hydrolysierbarn Silylgruppen und/oder SiOH-Gruppen und UV-absorbierende organische Gruppen, die an Seitenketten gebunden sind, aufweist, mit Organopolysiloxan (B), wie in Anspruch 1 definiert, erhalten wird, wobei die Primer-Zusammensetzung härtbar ist, um eine Schicht mit einem linearen Expansionskoeffizienten von $150x10^{-6}$/°C oder weniger zu bilden.

3. Primer-Zusammensetzung nach Anspruch 1 oder 2, worin die Gruppen R in Komponente (B) aus Alkylgruppen, Epoxy-substituierten Kohlenwasserstoffgruppen und (Meth)acryloxy-substituierten Kohlenwasserstoffgruppen ausgewählt ist.

4. Primer-Zusammensetzung nach Anspruch 3, worin die Gruppen R in Komponente (B) aus Methylgruppen und Epoxy-substituierten Kohlenwasserstoffgruppen ausgewählt sind.

5. Primer-Zusammensetzung nach einem der vorangegangenen Ansprüche, worin das Organopolysiloxan (B) SiOH-Gruppen im Molekül enthält.

6. Primer-Zusammensetzung nach einem der vorangegangenen Ansprüche, worin das Vinylpolymer (A), das hydrolysierbare Silylgruppen und/oder SiOH-Gruppen und UV-absorbierende organische Gruppen, die an Seitenketten gebunden sind, aufweist, durch Copolymerisieren von Monomerkomponenten erhalten wird, einschließlich (a) eines Vinylmonomers mit einer hydrolysierbaren Silylgruppe und/oder SiOH-Gruppe, die über eine C-Si-Bindung daran gebunden ist, (b) eines Vinylmonomers mit einer UV-absorbierenden organischen Gruppe und (c) eines anderen Monomers, das damit copolymerisierbar ist.

7. Primer-Zusammensetzung nach Anspruch 6, worin die Monomerkomponenten des Vinylpolymers (A) 1 bis 50 Gew.-% des Vinylmonomers (a), 1 bis 30 Gew.-% des Vinylmonomers (b) und 20 bis 98 Gew.-% des anderen Monomers (c) umfassen.

8. Primer-Zusammensetzung nach Anspruch 6 oder 7, worin Vinylmonomer (a) aus Folgendem ausgewählt ist:

Methacryloxypropyltri methoxysilan,
Methacryloxypropylmethyldimethoxysilan,
Methacryloxypropyldimethylmethoxysilan,
Acryloxypropyltrimethoxysilan und
Acryloxypropylmethyldimethoxysilan,
und Vinylmonomer (b) aus (Meth)acryl-Monomeren ausgewählt ist, die eine Benzotriazol- oder Benzophenongruppe aufweisen.

9. Primer-Zusammensetzung nach einem der vorangegangenen Ansprüche, worin das Organopolysiloxan (B) ein gewichtsmittleres Molekulargewicht von zumindest 1.000 aufweist.

10. Primer-Zusammensetzung nach einem der vorangegangenen Ansprüche, die weiters (D) kolloidale Kieselsäure umfasst, die z.B. zusammen mit dem Organopolysiloxan (B) zugesetzt wird.

11. Primer-Zusammensetzung nach einem der vorangegangenen Ansprüche, die weiters (E) eine Organosiliciumverbindung mit einem Stickstoffatom und einer Alkoxysilylgruppe im Molekül umfasst.

12. Verfahren, das die Herstellung einer Primer-Zusammensetzung nach einem der Ansprüche 1 bis 11 durch Kombinieren der oben angeführten Komponenten umfasst, gegebenenfalls unter vorhergehender Herstellung von Vinylpolymer (A) aus Monomerkomponenten nach Anspruch 6.

13. Verfahren zur Herstellung eines beschichteten Gegenstands, das Folgendes umfasst: das Aufbringen einer Primer-Zusammensetzung nach einem der Ansprüche 1 bis 11 auf eine Substratoberfläche, z.B. in einem Verdünnungslösungsmittel, zur Ausbildung einer Primer-Beschichtung und das Aufbringen einer Beschichtungszusammensetzung auf Polysiloxanbasis zur Ausbildung einer Polysiloxanbeschichtung, die über der Primer-Beschichtung liegt.

14. Verfahren nach Anspruch 13, worin die Polysiloxanbeschichtung ein Hardcoat ist, der aus einer Hartcoatierungszusammensetzung gebildet wird, die ein Hydrolysat oder Cohydrolysat zumindest eines Organooxysilans der Formel (2):

$$(R^7)_mSi(OR^8)_{4-m} \qquad (2)$$

worin $R^7$ eine organische Gruppe mit 1 bis 10 Kohlenstoffatomen ist, $R^8$ Wasserstoff oder eine einwertige organische Gruppe ist und m = 0, 1 oder 2 ist, sowie kolloidale Kieselsäure umfasst.

15. Verfahren nach Anspruch 13 oder 14, worin das Substrat eine Kunststoffschicht, z.B. aus Polycarbonat, Polystyrol, (Meth)acrylharz, Urethanharz, Thiourethanharz, Polykondensaten von halogeniertem Bisphenol A und Ethylenglykol, Acrylharz oder schwefelhältigen Harzen, ist.

16. Beschichteter Gegenstand, der ein Substrat, eine auf dem Substrat durch Aufbringen und Härten einer Primer-Zusammensetzung nach einem der Ansprüche 1 bis 11 ausgebildete Primer-Beschichtung und einen Polysiloxan-Hardcoat, der über der Primer-Beschichtung liegt, umfasst.

17. Beschichteter Gegenstand nach Anspruch 16, worin der Polysiloxan-Hardcoat aus einer Hartcoatierungszusammensetzung ausgebildet ist, die ein Hydrolysat oder Cohydrolysat zumindest eines Organooxysilans der Formel (2)

$$(R^7)_mSi(OR^8)_{4-m} \qquad (2)$$

worin $R^7$ eine organische Gruppe mit 1 bis 10 Kohlenstoffatomen ist, $R^8$ Wasserstoff oder eine einwertige organische Gruppe ist und m = 0, 1 oder 2 ist, sowie kolloidale Kieselsäure umfasst.

## Revendications

**1.** Composition d'apprêt convenant pour former un apprêt pour un revêtement extérieur en polysiloxane, comprenant

(A) un polymère de vinyle ayant des groupes silyle hydrolysables et/ou des groupes SiOH et des groupes organiques absorbant les UV rattachés à des chaînes latérales, et
(B) un organopolysiloxane de formule générale (1) :

$$(R)_aSi(Y)_bO_{(4-a-b)/2} \qquad (1)$$

dans laquelle

chaque R est indépendamment un groupe hydrocarboné monovalent substitué ou non substitué ayant 1 à 18 atomes de carbone, à l'exclusion des groupes hydrocarbonés monovalents contenant un fragment amino, choisi parmi alkyle, aryle, halogénoalkyle, halogénoaryle, alcényle, les formes substituées des précédents dans lesquelles un ou plusieurs atomes d'hydrogène sont remplacés par un groupe époxy, (méth)acryloxy ou mercapto, le groupe hydrocarboné pouvant être interrompu par O ou S,
chaque Y est indépendamment un groupe hydroxyle, un groupe alcoxy ayant 1 à 3 atomes de carbone, un groupe alcoxyalcoxy ayant 2 à 4 atomes de carbone, un groupe acyloxy ayant 1 à 6 atomes de carbone, un groupe alcénoxy ayant 1 à 6 atomes de carbone, ou un groupe isocyanate, les indices "a" et "b" étant des nombres satisfaisant à $0 < a < 2$, $0 < b < 3$ et $0 < a+b < 4$,
la quantité de composant (B) étant de 0,1 à 100 parties en poids d'extrait sec pour 100 parties en poids de (A) ;
ladite composition d'apprêt étant durcissable pour former une couche ayant un coefficient de dilatation linéaire égal ou inférieur à $150 \times 10^{-6}$/°C.

**2.** Composition d'apprêt pour un revêtement extérieur en polysiloxane, comprenant un composite (C) obtenu par réaction d'un polymère de vinyle (A) ayant des groupes silyle hydrolysables et/ou des groupes SiOH et des groupes organiques absorbant les UV rattachés à des chaînes latérales, avec un organopolysiloxane (B) selon la revendication 1, ladite composition d'apprêt étant durcissable pour former une couche ayant un coefficient de dilatation linéaire égal ou inférieur à $150 \times 10^{-6}$/°C.

**3.** Composition d'apprêt selon la revendication 1 ou 2, dans laquelle les groupes R dans le composant (B) sont choisis parmi les groupes alkyle, les groupes hydrocarbonés à substitution époxy, et les groupes hydrocarbonés à substitution (méth)acryloxy.

**4.** Composition d'apprêt selon la revendication 3, dans laquelle les groupes R dans le composant (B) sont choisis parmi les groupes méthyle et les groupes hydrocarbonés à substitution époxy.

**5.** Composition d'apprêt selon l'une quelconque des revendications précédentes, dans laquelle l'organopolysiloxane (B) contient des groupes SiOH dans la molécule.

**6.** Composition d'apprêt selon l'une quelconque des revendications précédentes, dans laquelle le polymère de vinyle (A) ayant des groupes silyle hydrolysables et/ou des groupes SiOH et des groupes organiques absorbant les UV rattachés à des chaînes latérales est obtenu par copolymérisation de composants monomères comprenant (a) un monomère de vinyle ayant un groupe silyle hydrolysable et/ou un groupe SiOH lié à celui-ci par l'intermédiaire d'une liaison C-Si, (b) un monomère de vinyle ayant un groupe organique absorbant les UV, et (c) un autre monomère copolymérisable avec ceux-ci.

**7.** Composition d'apprêt selon la revendication 6, dans laquelle lesdits composants monomères du polymère de vinyle (A) comprennent 1 à 50 % en poids du monomère de vinyle (a), 1 à 30 % en poids du monomère de vinyle (b) et 20 à 98 % en poids dudit autre monomère (c).

**8.** Composition d'apprêt selon la revendication 6 ou 7, dans laquelle le monomère de vinyle (a) est choisi parmi le méthacryloxypropyltriméthoxysilane, le méthacryloxypropylméthyldiméthoxysilane, le méthacryloxypropyldiméthylméthoxysilane, l'acryloxypropyltriméthoxysilane, et l'acryloxypropylméthyldiméthoxysilane, et le monomère de vinyle (b) est choisi parmi les monomères (méth)acryliques ayant un groupe benzotriazole ou benzophénone.

**9.** Composition d'apprêt selon l'une quelconque des revendications précédentes, dans laquelle l'organopolysiloxane

(B) a une masse moléculaire moyenne en masse d'au moins 1000.

**10.** Composition d'apprêt selon l'une quelconque des revendications précédentes, comprenant en outre (D) de la silice colloïdale, par exemple ajoutée avec l'organopolysiloxane (B).

**11.** Composition d'apprêt selon l'une quelconque des revendications précédentes, comprenant en outre (E) un composé organique du silicium ayant un atome d'azote et un groupe alcoxysilyle dans la molécule.

**12.** Procédé comprenant la préparation d'une composition d'apprêt selon l'une quelconque des revendications 1 à 11 par combinaison des composants mentionnés de celle-ci, éventuellement avec préparation préliminaire d'un polymère de vinyle (A) à partir de composants monomères selon la revendication 6.

**13.** Procédé pour préparer un article revêtu, comprenant l'application d'une composition d'apprêt selon l'une quelconque des revendications 1 à 11 sur une surface d'un substrat, par exemple dans un solvant de dilution, pour former un revêtement d'apprêt, et l'application d'une composition de revêtement à base de polysiloxane pour former une couche de polysiloxane recouvrant le revêtement d'apprêt.

**14.** Procédé selon la revendication 13, dans lequel le revêtement de polysiloxane est un revêtement dur formé à partir d'une composition de revêtement dur comprenant un hydrolysat ou co-hydrolysat d'au moins un organo-oxysilane de formule (2) :

$$(R^7)_mSi(OR^8)_{4-m} \qquad (2)$$

dans laquelle $R^7$ est un groupe organique ayant 1 à 10 atomes de carbone, $R^8$ est l'hydrogène ou un groupe organique monovalent, et m vaut 0, 1 ou 2, et de la silice colloïdale.

**15.** Procédé selon la revendication 13 ou 14, dans lequel le substrat est une couche de matière plastique, par exemple en polycarbonate, polystyrène, résine (méth)acrylique, résine d'uréthane, résine de thiouréthane, polycondensats de bisphénol A halogéné et d'éthylèneglycol, résine acrylique, ou résines soufrées.

**16.** Article revêtu comprenant un substrat, un revêtement d'apprêt formé sur le substrat par application et durcissement d'une composition d'apprêt selon l'une quelconque des revendications 1 à 11, et un revêtement dur en polysiloxane recouvrant le revêtement d'apprêt.

**17.** Article revêtu selon la revendication 16, dans lequel le revêtement dur est formé à partir d'une composition de revêtement dur comprenant un hydrolysat ou co-hydrolysat d'au moins un organo-oxysilane de formule (2) :

$$(R^7)_mSi(OR^8)_{4-m} \qquad (2)$$

dans laquelle $R^7$ est un groupe organique ayant 1 à 10 atomes de carbone, $R^8$ est l'hydrogène ou un groupe organique monovalent, et m vaut 0, 1 ou 2, et de la silice colloïdale.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 56092059 A
- JP 1149878 A
- JP 8151415 A
- JP 2001114841 A
- JP 3102696 B
- JP 2001214122 A
- JP 2001047574 A
- JP 2004001393 A
- EP 1408082 A
- EP 1914259 A
- JP 61056187 B